# EUROPEAN PATENT APPLICATION

(11) **EP 4 648 461 A1**
(43) Date of publication of application: **12.11.2025**
(21) Application number: 23914015.5
(22) Date of filing: 04.01.2023
(51) Int. Cl.: H04W 24/02

(54) **CELL ACCESS CONTROL METHODS, SYSTEM AND APPARATUSES, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2023/070566
(87) International publication number: WO 2024/145856

(57) **Abstract**

Provided in the embodiments of the present disclosure are cell access control methods, system and apparatuses, a communication device, and a storage medium. A cell access control method is executed by a UE, the method comprising: on the basis of second configuration information corresponding to first configuration information, executing a mobility operation of a cell and/or a cell group, the first configuration information being used for mobility configuration, and the second configuration information comprising or being used for indicating configuration information and/or a trigger condition of a candidate cell and/or a candidate cell group.

## Description

### TECHNICAL FIELD

The present disclosure relates to, but is not limited to, the field of wireless communication technology, and in particular to a method, system, apparatus for cell access control, a communication device, and a storage medium.

### BACKGROUND

In order to reduce signaling overhead and other effects caused by reconfiguration after selective activation of a cell group, user equipment (UE) can retain a previous conditional primary-secondary-cell (PSCell) change (CPC) and other configurations after a secondary cell group (SCG) is changed or an SCG is added.

However, after a serving node changes, configuration information such as a trigger condition may also change. For example, if the CPC is initiated by a secondary node (SN), the trigger condition needs to be determined based on a measurement configuration of a serving SN. After the SN changes, the subsequent CPC configuration and the corresponding measurement configuration may be changed, which may make it difficult to unify the measurement configurations and trigger conditions between the UE and multiple candidate SNs.

### SUMMARY

Embodiments of the present disclosure provide a method, system and apparatus for cell access control, a communication device, and a storage medium.

A first aspect of embodiments of the disclosure provides a method for cell access control, performed by a user equipment (UE). The method includes: performing a mobility operation of a cell and/or a cell group based on second configuration information corresponding to first configuration information, in which the first configuration information is configured for mobility configuration, and the second configuration information comprises or indicates configuration information and/or a trigger condition of a candidate cell and/or a candidate cell group.

A second aspect of embodiments of the disclosure provides a method for cell access control, performed by a current serving master node (MN). The method includes: sending second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

A third aspect of embodiments of the disclosure provides a method for cell access control, performed by a current serving secondary node (SN). The method includes: sending second configuration information corresponding to first configuration information to a UE, wherein the first configuration information is configured for mobility configuration, and the second configuration information comprises or indicates configuration information and/or a trigger condition of a candidate cell and/or a candidate cell group.

A fourth aspect of embodiments of the disclosure provides a method for cell access control, performed by a candidate SN. The method includes: sending second configuration information corresponding to first configuration information to a UE, wherein the first configuration information is configured for mobility configuration, and the second configuration information comprises or indicates configuration information and/or a trigger condition of a candidate cell and/or a candidate cell group.

A fifth aspect of embodiments of the disclosure provides a system for cell access control. The system includes: a UE, a current serving MN, a current serving SN, and a candidate SN. The UE is configured to perform a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group; the currently serving MN is configured to send the second configuration information corresponding to the first configuration information to the UE; the current serving SN is configured to send the second configuration information corresponding to the first configuration information to the UE; and the candidate SN is configured to send the second configuration information corresponding to the first configuration information to the UE.

A sixth aspect of embodiments of the disclosure provides an apparatus for cell access control, applied to a UE. The apparatus includes: a performing unit, configured to perform a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group.

A seventh aspect of embodiments of the disclosure provides an apparatus for cell access control, applied to a currently serving MN. The apparatus includes: a forwarding unit, configured to send second configuration information corresponding to first configuration information to a UE, wherein the first configuration information is configured for mobility configuration, and the second configuration information comprises or indicates configuration information and/or a trigger condition of a candidate cell and/or a candidate cell group.

An eighth aspect of embodiments of the disclosure provides an apparatus for cell access control, applied to a current serving SN. The apparatus includes: a processing unit, configured to send second configuration information corresponding to first configuration information to a UE, wherein the first configuration information is configured for mobility configuration, and the second configuration information comprises or indicates configuration information and/or a trigger condition of a candidate cell and/or a candidate cell group.

A ninth aspect of embodiments of the disclosure provides an apparatus for cell access control, applied to a candidate SN. The apparatus includes: an operation unit, configured to send second configuration information corresponding to first configuration information to a UE, wherein the first configuration information is configured for mobility configuration, and the second configuration information comprises or indicates configuration information and/or a trigger condition of a candidate cell and/or a candidate cell group.

A tenth aspect of embodiments of the disclosure provides a communication device, including a processor, a transceiver, a memory and an executable program stored in the memory and executable by the processor. The processor performs the method for cell access control in any of the above embodiments.

An eleventh aspect of embodiments of the disclosure provides a computer storage medium for storing an executable program. When the executable program is executed by a processor, the method for cell access control in any of the above embodiments is performed.

The method for cell access control provided by embodiments of the present disclosure, performed by the UE, includes: performing a mobility operation of a cell and/or a cell group based on the second configuration information corresponding to the first configuration information; the first configuration information is configured for mobility configuration; the second configuration information includes or indicates the configuration information and/or the trigger condition of the candidate cell and/or the candidate cell group. In this way, a network node can determine the configuration information of the candidate cell and/or the candidate cell group based on the first configuration information configured for mobility configuration, thereby improving the consistency of measurement configurations between the UE and multiple network nodes, reducing an error caused by inconsistent configurations between the UE and the multiple network nodes due to a change in a serving node, and reducing signaling overhead caused by frequent updates and synchronization of configurations.

It should be understood that the foregoing general description and the following detailed description are illustrative and explanatory only and are not restrictive of the embodiments of the present disclosure.

### BRIEF DESCRIPTION OF THE DRAWINGS

The accompanying drawings, which are incorporated in and constitute a part of the description, illustrate embodiments consistent with the present disclosure and, together with the description, serve to explain the principles of the embodiments of the present disclosure.
FIG. 1 is an architectural diagram of a wireless communication system according to an embodiment of the present disclosure.
FIG. 2 is a flow chart of a method for cell access control according to an embodiment of the present disclosure.
FIG. 3 is a flow chart of a method for cell access control according to an embodiment of the present disclosure.
FIG. 4 is a flow chart of a method for cell access control according to an embodiment of the present disclosure.
FIG. 5 is a flow chart of a method for cell access control according to an embodiment of the present disclosure.
FIG. 6 is a flow chart of a method for cell access control according to an embodiment of the present disclosure.
FIG. 7 is a flow chart of a method for cell access control according to an embodiment of the present disclosure.
FIG. 8 is a flow chart of a method for cell access control according to an embodiment of the present disclosure.
FIG. 9 is a flow chart of a method for cell access control according to an embodiment of the present disclosure.
FIG. 10 is an architectural diagram of a communication system according to an embodiment of the present disclosure.
FIG. 11 is a flow chart of a method for cell access control according to an embodiment of the present disclosure.
FIG. 12 is a flow chart of a method for cell access control according to an embodiment of the present disclosure.
FIG. 13 is a flow chart of a method for cell access control according to an embodiment of the present disclosure.
FIG. 14 is a flow chart of a method for cell access control according to an embodiment of the present disclosure.
FIG. 15 is a flow chart of a method for cell access control according to an embodiment of the present disclosure.
FIG. 16 is a flow chart of a method for cell access control according to an embodiment of the present disclosure.
FIG. 17 is a flow chart of a method for cell access control according to an embodiment of the present disclosure.
FIG. 18 is a flow chart of a method for cell access control according to an embodiment of the present disclosure.
FIG. 19 is a flow chart of a method for cell access control according to an embodiment of the present disclosure.
FIG. 20 is a block diagram of an apparatus for cell access control device according to an embodiment of the present disclosure.
FIG. 21 is a block diagram of an apparatus for cell access control device according to an embodiment of the present disclosure.
FIG. 22 is a block diagram of an apparatus for cell access control device according to an embodiment of the present disclosure.
FIG. 23 is a block diagram of an apparatus for cell access control device according to an embodiment of the present disclosure.
FIG. 24 is a block diagram of a terminal according to an embodiment of the present disclosure.
FIG. 25 is a block diagram of a communication device according to an embodiment of the present disclosure.

### DETAILED DESCRIPTION

Embodiments will be described in detail herein, examples of which are shown in the accompanying drawings. When the following description refers to the drawings, unless otherwise indicated, the same numbers in different drawings represent the same or similar elements. The implementations described in the following embodiments do not represent all implementations consistent with the embodiments of the present disclosure. Instead, they are only examples of devices and methods consistent with some aspects of the embodiments of the present disclosure.

The terms used in the embodiments of the present disclosure are only for the purpose of describing specific embodiments, and are not intended to limit the embodiments of the present disclosure. The singular forms of "a", "said", and "the" used in the present disclosure are also intended to include plural forms, unless the context clearly indicates other meanings. It should also be understood that the term "and/or" used in this description refers to and includes any or all possible combinations of one or more associated listed items.

It should be understood that although the terms first, second, third, etc. may be configured to describe various information in the embodiments of the disclosure, the information should not be limited to these terms. These terms are only configured to distinguish the same type of information from each other. For example, without departing from the scope of the embodiments of the disclosure, the first information may also be referred to as the second information, and similarly, the second information may also be referred to as the first information. Depending on the context, the word "if" as used herein may be interpreted as "at the time of" or "when" or "in response to determining".

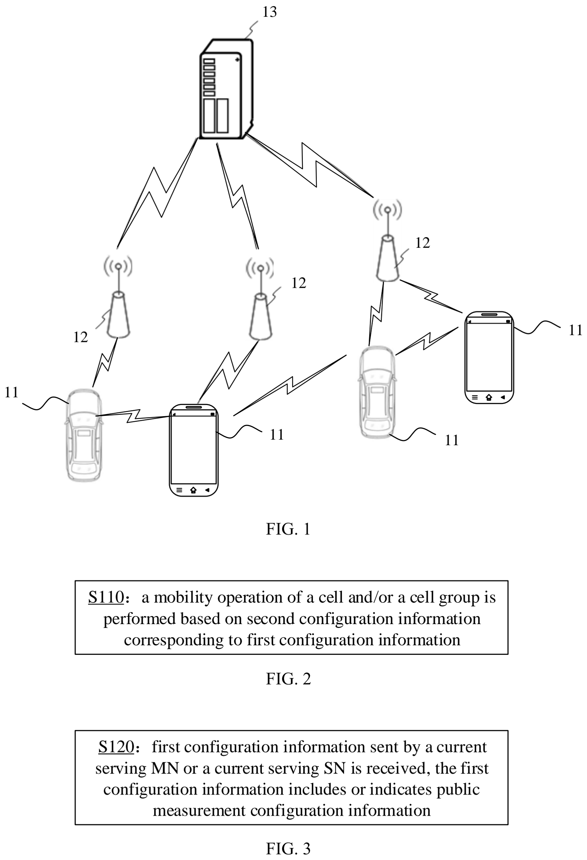

With reference to FIG. 1, FIG. 1 is an architectural diagram of a wireless communication system according to an embodiment of the present disclosure. As shown in FIG. 1, the wireless communication system is a communication system based on cellular mobile communication technology, and the wireless communication system may include: a plurality of terminals 11 and a plurality of access devices 12.

The terminal 11 can be a device that provides voice and/or data connectivity to a user. The terminal 11 can communicate with one or more core networks via a radio access network (RAN). The terminal 11 can be an Internet of Things terminal, such as a sensor device, a mobile phone (or a "cellular" phone), or a computer with an Internet of Things terminal. For example, the terminal can be a fixed, portable, pocket-sized, handheld, computer-built-in or vehicle-mounted device, such as, a station (STA), a subscriber unit, a subscriber station, a mobile station, a mobile station, a remote station, an access point, a remote terminal, an access terminal, a user device, a user agent, a user equipment (UE), or a user terminal. Or, the terminal 11 can also be a device of an unmanned aerial vehicle. Or, the terminal 11 can also be a vehicle-mounted device, for example, it can be a driving computer with a wireless communication function, or a wireless communication device connected to an external driving computer. Or, the terminal 11 may also be a roadside device, such as a street lamp, a traffic light or other roadside device with a wireless communication function.

The access device 12 may be a network device in the wireless communication system. The wireless communication system may be a fourth-generation mobile communication technology (4G) system, also known as a long term evolution (LTE) system; or the wireless communication system may be a 5G system, also known as a new radio (NR) system or a 5G NR system. Or, the wireless communication system may be a next generation system of the 5G system. An access network in the 5G system may be referred to as a new generation-radio access network (NG-RAN), or a Machine Type Communication (MTC) system.

The access device 12 can be an evolved access device (eNB) adopted in a 4G system. Or, the access device 12 can also be an access device (gNB) adopting a centralized distributed architecture in a 5G system. When the access device 12 adopts the centralized distributed architecture, it usually includes a central unit (CU) and at least two distributed units (DU). The central unit is provided with protocol stacks of a packet data convergence protocol (PDCP) layer, a radio link layer control protocol (RLC) layer, and a media access control (MAC) layer, and the distributed unit is provided with a protocol stack of a physical (PHY) layer. The specific implementation of the access device 12 is not limited in the embodiments of the present disclosure.

A wireless connection can be established between the access device 12 and the terminal 11 through a radio air interface. In different implementations, the radio air interface is a radio air interface based on the fourth generation mobile communication network technology (4G) standard; or the radio air interface is a radio air interface based on the fifth generation mobile communication network technology (5G) standard, for example, the radio air interface is a new radio; or the radio air interface can also be a radio air interface based on the next generation mobile communication network technology standard of 5G.

Optionally, the wireless communication system may further include a network management device 13. Several access devices 12 are respectively connected to the network management device 13. The network management device 13 may be a core network device in the wireless communication system. For example, the network management device 13 may be a mobility management entity (MME) in an evolved packet core (EPC). Or, the network management device may also be other core network devices, such as a serving gateway (SGW), a public data network gateway (PGW), a policy and charging rules function unit (PCRF) or a home subscriber server (HSS). The implementation form of the network management device 13 is not limited in the embodiments of the present disclosure.

In an embodiment, the terminal 11 can be configured to perform cell access control. For example, the terminal 11 can be a UE or other terminals. The access device 12 can be a network node, and the network node can also be called a network device, a network side device, a network side node, an access device, or other names, and its name in the present disclosure is not used as a description to limit its formal scope. The network node can be, for example, one or more of a current serving master node (MN), the current serving secondary node (SN), or a candidate SN of the UE. The current serving MN can be a master node (MN) corresponding to a master cell group (MCG) currently accessed by the UE, and the current serving SN can be a secondary node SN corresponding to a secondary cell group (SCG) currently accessed by the UE. The candidate SN can be an SN corresponding to a candidate cell and/or a candidate cell group that the UE can access when the UE needs to perform a cell group mobility operation. For example, in a conditional mobility operation, the UE can switch from the currently accessed SCG to access a candidate SCG when a trigger condition is met.

In an embodiment, Multi-Radio Dual Connectivity (MR-DC) is a generalized Intra-E-UTRA (Intra Evolved Universal Terrestrial Radio Access Network) dual connectivity. The UE can use radio resources provided by two different schedulers. The two schedulers are located on two different Next Generation Radio Access Network (NG-RAN) nodes, through a non-ideal backhaul connection, one providing New Radio (NR) access and the other providing E-UTRA or NR access. One of the two nodes acts as a MN, and the other acts as a SN. The MN and the SN are connected through a network interface, and at least the MN is connected to the core network.

In an embodiment, under the dual connectivity, the UE can access two cell groups at the same time, namely a master cell group (MCG) and a secondary cell group (SCG).There may be a plurality of cells in the MCG, one of which is configured to initiate initial access, and this cell is called a primary cell (PCell). Other cells except the PCell can be secondary cells (SCells), and the Pcell can be understood as the most " primary" cell in MCG. The PCell under the MCG and the Scells under the MCG can be combined through carrier aggregation (CA).

Correspondingly, among the plurality of cells in the SCG, a cell configured to initiate the initial access is called a Primary Secondary Cell (PSCell), and the PSCell can be understood as the most "primary" cell in the SCG. The primary cell in the MCG is the PCell, and the secondary cell in the MCG is the SCell; the primary secondary cell in the SCG is the PSCell, and the secondary cell in the SCG is the SCell.

As shown in FIG. 2, an embodiment of the present disclosure provides a method for cell access control, which is performed by a UE. The method may include the following steps.

S110, a mobility operation of a cell and/or a cell group is performed based on second configuration information corresponding to first configuration information.

In embodiments of the present disclosure, the UE may be a terminal under dual connection. For example, the UE may include but is not limited to: a mobile phone, a wearable device, a vehicle terminal, a road side unit (RSU), a smart home terminal, an industrial sensor device and/or a medical device, etc.

In an embodiment, the mobility operation of the cell and/or the cell group is performed based on the second configuration information corresponding to the first configuration information. The first configuration information is configured for mobility configuration, and the second configuration information includes or indicates configuration information and/or a trigger condition of a candidate cell and/or a candidate cell group.

In an embodiment, the first configuration information may include or indicates configuration information currently stored by the UE. For example, the first configuration information is received from a network node. For example, the first configuration information includes or indicates public measurement configuration information. Or, the first configuration information may also include or indicate at least one of: part or all of currently stored measurement configurations related to an SCG, a trigger condition corresponding to SCG mobility of the UE, configuration information of a candidate cell and/or a candidate cell group corresponding to the SCG mobility of the UE, an identifier of the candidate cell and/or the candidate cell group corresponding to the SCG mobility of the UE. Or, the first configuration information may include or indicate an identifier of the candidate cell and/or the candidate cell group, and a measurement identifier corresponding to the trigger condition of the candidate cell and/or the candidate cell group.

In an embodiment, the mobility operation of the cell and/or the cell group is performed based on the second configuration information corresponding to the first configuration information, wherein the second configuration information includes or indicates the configuration information and/or the trigger condition of the candidate cell and/or the candidate cell group. For example, the second configuration information may be sent by a network node to the UE.

In an embodiment, the first configuration information may be configured for the network node to determine the configuration information of the candidate cell and/or the candidate cell group. The candidate cell and/or the candidate cell group may be at least one cell and/or at least one cell group accessible to the UE. For example, in conditional handover of cell group of the UE, the candidate cell group may be a cell group to which the UE switches access from the currently accessed cell group.

In an embodiment, the mobility operation of the cell and/or the cell group includes one or more of the following: selective activation of the cell and/or the cell group, a mobility operation of the cell and/or the cell group triggered based on a condition, or a mobility operation triggered based on indication information of Media-Access-Control Control Element (MAC CE) or downlink control information (DCI). For example, the mobility operation may include: addition and/or change of a cell or a cell group accessed by the UE.

The addition of a cell group accessed by the UE may refer to that UE switches from a state of not accessing a cell group to a state of accessing a cell group. For example, the UE accesses an SCG from a state where it does not access an SCG. The change of a cell group accessed by the UE may refer to that the UE accesses another cell group from a currently accessed cell group. For example, the UE switches from the currently accessed SCG to accessing a candidate target SCG. Correspondingly, the addition and change of a cell accessed by the UE may refer to the addition and change of the cell group accessed by the UE.

In an embodiments, performing the mobility operation of the cell and/or the cell group based on the second configuration information corresponding to the first configuration information includes: determining whether a trigger condition corresponding to the mobility operation is met based on the second configuration information corresponding to the first configuration information; and accessing the corresponding cell and/or cell group in response to the trigger condition being met.

In an embodiment, the network node may include one of: a current serving MN, a current serving SN, and at least one candidate SN. The candidate SN may be an SN corresponding to a candidate cell and/or a candidate cell group, and the candidate cell group may include a candidate target MCG and/or a candidate target SCG, etc.

The mobility operation of the cell and/or the cell group includes one or more of: selective activation of cells and/or cell groups, a conditional mobility operation of a cell and/or a cell group, or a mobility operation triggered based on MAC CE or DCI indication information.

In the related art, for the selective activation of cell groups in MR-DC, after a cell group (CG) is changed, the configuration can still be executed without the need for the network to reconfigure or reinitialize the corresponding configuration information of the selective activation of cell groups, thereby reducing signaling overhead and an interruption duration caused by the cell group change.

The configuration information of the selective activation of cell groups may include at least one of the following: a configuration ID, an activation condition (possible), a configuration of a cell and/or a cell group to be activated.

The selective activation of cell groups can make the configuration still be able to be executed after the cell group is changed, without the need for the network to reconfigure or reinitialize the corresponding configuration of the selective activation of cell groups. Therefore, in the selective activation of the cell groups, the network device can provide the terminal with a "cell group to be activated", and the "cell group to be activated" can be activated or deactivated later without re-providing the configuration of the cell group.

In the selective activation of cell groups, the network device may provide a pre-configured candidate target cell group or target cell to the terminal. The terminal may subsequently activate or deactivate the pre-configured candidate cell and/or cell group according to a configuration (e.g., an activation message) sent by the network device or a corresponding activation event, without the need to re-provide the configuration of the cell group. Or, in the selective activation of cell groups, after activating a new cell or cell group, or applying a new cell configuration or cell group configuration, or accessing a new cell or cell group, the UE may not delete the corresponding configuration information for the selective activation of cell groups.

The selective activation of cell groups may also be referred to as cell group activation. The cell group activation enables the corresponding configuration information to be executed after the cell and/or cell group is changed, without the need for the network to reconfigure or reinitialize the corresponding configuration information of the cell group activation. Therefore, the cell group activation can reduce signaling overhead and the interruption duration caused by the cell group change. The configuration information of cell group activation may include: a configuration ID, a configuration of a target cell or a configuration of a target cell group. Optionally, the configuration information of cell group activation may also include a trigger condition (or referred to as an execution condition, an activation condition).

In the related art, the cell group activation is a mobility management process, including any kind of mobility management process in which, by configuring a configuration of the cell group activation, the UE activates or deactivates a corresponding cell or cell group according to the signaling sent by the network, a criteria specified in the specification, or through a UE autonomous mode, or including a mobility management process in which the UE accesses the cell or cell group by applying the corresponding cell configuration or cell group configuration.

In the related art, the cell group activation is a mobility management process, including any mobility management process that does not delete or release a corresponding part or all of the configuration information after executing the mobility process. Not deleting or releasing the corresponding part or all of the configuration information can also be called retaining the corresponding part or all of the configuration information.

In embodiments of the disclosure, the cell group is one or more of a primary cell group (MCG) or a secondary cell group (SCG). The MCG includes one or more of a primary cell (PCell) or a secondary cell (SCell). The SCG includes one or more of a primary secondary cell (PSCell) or a secondary cell (SCell).

In an embodiment, the selective activation of cell groups may include cell selective activation or cell activation, such as one or more of PCell activation, PSCell activation or SCell activation.

In an embodiment, the configuration information of the candidate cell and/or the candidate cell group may include configuration information generated by the network node for a measurement identifier corresponding to the trigger condition of the candidate cell and/or the candidate cell group stored in the UE.

In an embodiment, the configuration information of the candidate cell or the candidate cell group may include at least one of: a measurement object identifier, measurement object information, a reporting configuration identifier, reporting configuration information, a measurement identifier, measurement identifier information, or radio resource control (RRC) reconfiguration information of the candidate cell and/or the candidate cell group. The candidate cell may include at least one of a candidate target primary cell, a candidate target primary secondary cell, or a candidate target secondary cell. The candidate cell group may include a candidate target MCG and/or a candidate target SCG.

For example, the configuration information of the candidate cell and/or the candidate cell group is configuration information that needs to be applied when the UE accesses the candidate cell and/or the candidate cell group. For example, when the UE accesses the candidate cell and/or the candidate cell group, it needs to apply one or more of the measurement object identifier, the measurement object information, the reporting configuration identifier, the reporting configuration information, the measurement identifier, the measurement identifier information, or the radio resource control (RRC) reconfiguration information of the candidate cell and/or the candidate cell group.

In an embodiment, one or more of the measurement object identifier, the measurement object information, the reporting configuration identifier, the reporting configuration information, the measurement identifier or the measurement identifier information may be included in the radio resource control (RRC) reconfiguration information of the candidate cell and/or the candidate cell group.

In an embodiment, the measurement object identifier may be an identifier corresponding to the measurement object information. For example, the measurement object may include a frequency point to be measured, etc. Each measurement object identifier corresponds to one piece of or a group of measurement object information, and each piece of or each group of measurement object information indicates a measurement method and/or a measurement requirement of the measurement object. The reporting configuration identifier may be an identifier corresponding to the reporting configuration information. For example, each reporting configuration identifier corresponds to one piece of or a group of reporting configuration information, and each piece of or each group of reporting configuration information may be configured to indicate a reporting method and/or a reporting requirement of a measurement report, etc.

In an embodiment, the first configuration information sent by a current serving MN or a current serving SN is received. The first configuration information includes or indicates public measurement configuration information. The mobility operation of the cell and/or the cell group is performed based on the second configuration information corresponding to the first configuration information.

In an embodiment, the second configuration information sent by the network node is received. The second configuration information includes the trigger condition determined by the network node based on the first configuration information. The network node is a current serving MN, a current serving SN or a candidate SN. An event corresponding to the trigger condition is determined based on the first configuration information. When the UE meets the event corresponding to the trigger condition, the mobility operation of the cell and/or cell group is performed based on the second configuration information.

In an embodiment, the first configuration information sent by a current serving MN or a current serving SN is received. The second configuration information sent by a network node is received. The second configuration information includes the trigger condition determined by the network node based on the first configuration information. The network node is a current serving MN, a current serving SN or a candidate SN. The event corresponding to the trigger condition is determined based on the first configuration information. When the UE meets the event corresponding to the trigger condition, the mobility operation of the cell and/or cell group is performed based on the second configuration information.

In an embodiment, determining the event corresponding to the trigger condition based on the first configuration information may include: determining the event corresponding to the trigger condition based on content of the first configuration information. The first configuration information may record an event corresponding to at least one measurement identifier associated with the trigger condition. Each measurement identifier may correspond to an event. Meeting the trigger condition may refer to meeting at least one event corresponding to the trigger condition. When the trigger condition corresponds to multiple events, meeting the trigger condition may refer to meeting some or all of the events corresponding to the trigger condition.

In an embodiment, the second configuration information further includes or indicates at least one of: cell mobility configuration information, cell group mobility configuration information, or a configuration identifier.

In an embodiment, the method may further include: after a secondary cell group (SCG) accessed by the UE changes, retaining at least one of the first configuration information and the second configuration information in the UE.

In an embodiment, after the UE accesses the candidate cell and/or the candidate cell group, the UE applies the configuration information of the candidate cell and/or the candidate cell group, so that the mobility operation can be performed based on the configuration information of the candidate cell and/or the candidate cell group subsequently. For example, the trigger condition corresponding to the mobility operation is determined based on the configuration information, and/or whether the trigger condition is met is determined.

In an embodiment, the second configuration information determined by the network node based on the first configuration information of the UE is received. The network node is a current serving MN, a current serving SN or a candidate SN. The mobility operation of the cell and/or cell group is performed based on the second configuration information corresponding to the first configuration information.

In an embodiment, the first configuration information includes or indicates at least one of: measurement configuration information, in which The measurement configuration information includes: part or all of measurement configurations related to the SCG; a trigger condition corresponding to the SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In an embodiment, the part or all of the measurement configurations related to the SCG includes: all measurement configurations related to a trigger condition of a conditional SCG mobility configuration.

In an embodiment, the all measurement configurations related to the trigger condition of the conditional SCG mobility configuration include at least one of: configuration information of a measurement identifier associated with the trigger condition of the conditional SCG mobility configuration; a measurement object identifier associated with the measurement identifier; measurement object information associated with the measurement identifier; a reporting configuration identifier associated with the measurement identifier; reporting configuration information associated with the measurement identifier; or another configuration information related to the SCG mobility.

In an embodiment, the second configuration information determined by the network node based on the first configuration information of the UE is received. The mobility operation of the cell and/or the cell group is performed based on the second configuration information corresponding to the first configuration information.

In an embodiment, the second configuration information determined by the network node based on the first configuration information of the UE is received. The network node is a current serving MN, a current serving SN or a candidate SN. The second configuration information includes or indicates configuration information of a candidate cell and/or a candidate cell group. The second configuration information includes indication information, and the indication information indicates whether a measurement identifier corresponding to the indication information is enabled or disabled. The mobility operation of the cell and/or the cell group is performed based on the second configuration information and an enabled measurement identifier among at least one measurement identifier in the UE.

In an embodiment, performing the mobility operation of the cell and/or the cell group includes: accessing a candidate cell and/or a candidate cell group; and applying second configuration information in response to accessing the candidate cell and/or the candidate cell group.

In an embodiment, performing the mobility operation of the cell and/or the cell group based on the second configuration information and the enabled measurement identifier among the at least one measurement identifier in the UE includes: determining whether at least one measurement identifier corresponding to a trigger condition of another candidate cell and/or another candidate cell groups is enabled or disabled based on the second configuration information; accessing the another candidate cell and/or the another candidate cell group when the UE meets an event corresponding to the enabled measurement identifier; and applying second configuration information corresponding to the another candidate cell and/or the another candidate cell groups accessed.

In an embodiment, meeting the event corresponding to the enabled measurement identifier may refer to meeting part or all of the events corresponding to at least one enabled measurement identifier.

In an embodiment, the first configuration information includes: an identifier of the candidate cell and/or the candidate cell group, and a measurement identifier corresponding to the trigger condition of the candidate cell and/or the candidate cell group.

In an embodiment, the configuration information of the candidate cell and/or the candidate cell group includes at least one of: measurement configuration information, a measurement object identifier, measurement object information, a reporting configuration identifier, reporting configuration information, a measurement identifier, measurement identifier information, or radio resource control (RRC) reconfiguration information.

In an embodiment, the trigger condition corresponding to the candidate cell and/or the candidate cell group is not included in the configuration information of the candidate cell and/or the candidate cell group.

In an embodiment, configuration information of a first candidate cell or a first candidate cell group includes a measurement configuration corresponding to a trigger condition of one or more other second candidate cells or second candidate cell groups. In response to the UE accessing the first candidate cell or the first candidate cell group and/or applying the configuration information of the first candidate cell or the first candidate cell group, the measurement configuration corresponding to the trigger condition of the one or more other second candidate cells or second candidate cell groups contained therein take effects, and the UE determines whether the trigger condition of the one or more other second candidate cells or second candidate cell groups is met based on the measurement configuration.

The first candidate cell may be different from the second candidate cell, and/or the first candidate cell group may be different from the second candidate cell group.

For example, in response to the UE accessing the first candidate cell or the firs candidate cell group, the UE determines, based on a measurement identifier corresponding to the trigger condition of the second candidate cell or the second candidate cell group, whether the measurement identifier is enabled or disabled according to a configuration of the corresponding measurement identifier in the measurement configuration of the first candidate cell or the first candidate cell group (i.e., the current serving cell group).

In this way, the network node can determine the configuration information of the candidate cell and/or the candidate cell group based on the first configuration information configured for mobility configuration, thereby improving the consistency of measurement configuration between the UE and multiple network nodes, reducing errors caused by inconsistent configuration between the UE and multiple network nodes due to a change in a serving node, and reducing signaling overhead caused by frequent updates and synchronization of configurations.

It should be noted that those skilled in the art can understand that the method provided in the embodiments of the present disclosure can be executed alone or together with some methods in the embodiments of the present disclosure or other embodiments or some methods in the related art.

It should be noted that the technical features recorded in the aforementioned embodiments can be arbitrarily arranged and combined, and the order can be exchanged without contradiction, and can be arbitrarily combined into new method technical solutions.

As shown in FIG. 3, an embodiment of the present disclosure provides a method for cell access control, which is performed by a UE. The method may include the following steps.

S120, first configuration information sent by a current serving master node (MN) or a current serving secondary node (SN) is received, the first configuration information includes or indicates public measurement configuration information.

It should be noted that, for descriptions of parts that are repeated or correspond to the aforementioned embodiments, reference may be made to the descriptions of the aforementioned related contents such as step S110, which will not be repeated here.

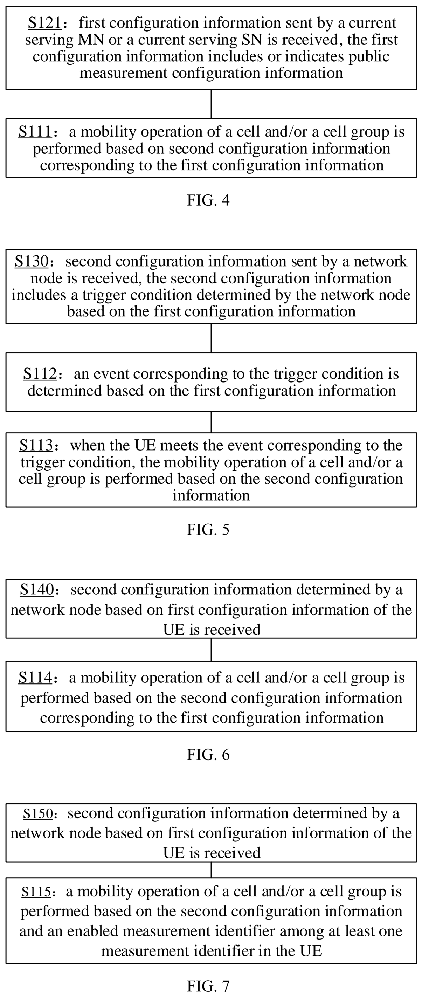

As shown in FIG. 4, an embodiment of the present disclosure provides a method for cell access control, which is performed by a UE. The method may include the following steps.

S121, first configuration information sent by a current serving MN or a current serving SN is received, the first configuration information includes or indicates public measurement configuration information.

S111, a mobility operation of a cell and/or a cell group is performed based on second configuration information corresponding to the first configuration information.

In this way, a trigger condition is determined based on the public measurement configuration information uniformly configured by the serving node MN or the SN, which can help the UE and multiple network nodes to negotiate and unify the measurement configuration regarding an SCG mobility operation, thereby improving the consistency of measurement configurations between the UE and multiple network nodes, reducing an error caused by inconsistent configurations between the UE and the multiple network nodes due to a change in the serving node, and reducing the signaling overhead caused by frequent updates and synchronization of configurations.

It should be noted that, for descriptions of parts that are repeated or correspond to the aforementioned embodiments, reference may be made to the descriptions of the aforementioned related contents such as step S110, which will not be repeated here.

As shown in FIG. 5, an embodiment of the present disclosure provides a method for cell access control, which is performed by a UE. The method may include the following steps.

S130, second configuration information sent by a network node is received, the second configuration information includes a trigger condition determined by the network node based on the first configuration information.

S112, an event corresponding to the trigger condition is determined based on the first configuration information.

S113, when the UE meets the event corresponding to the trigger condition, the mobility operation of a cell and/or a cell group is performed based on the second configuration information.

In an embodiment, the network node is a current serving MN, a current serving SN, or a candidate SN.

In an embodiment, the second configuration information sent by the network node is received. The second configuration information includes the trigger condition determined by the network node based on the first configuration information. The first configuration information sent by the current serving MN or the current serving SN is received. The first configuration information includes or indicates public measurement configuration information. An event corresponding to the trigger condition is determined based on the first configuration information. When the UE meets the event corresponding to the trigger condition, the mobility operation of the cell and/or the cell group is performed based on the second configuration information.

In an embodiment, the second configuration information further includes or indicates at least one of: cell mobility configuration information, cell group mobility configuration information, or a configuration identifier.

It should be noted that, for descriptions of parts that are repeated or correspond to the aforementioned embodiments, reference may be made to the descriptions of the aforementioned related contents such as step S110, which will not be repeated here.

It should be noted that the technical features described in the above embodiments can be arbitrarily arranged and combined and the order can be exchanged without contradiction, and can be arbitrarily combined into a new method technical solution. For example, the execution order of step S130 and step S112 can be exchanged.

The present disclosure provides a method for cell access control, which is performed by a UE. The method may include: performing a mobility operation of a cell and/or a cell group based on second configuration information corresponding to first configuration information; and after a secondary cell group (SCG) accessed by the UE changes, retaining at least one of the first configuration information and the second configuration information in the UE.

It should be noted that, for descriptions of parts that are repeated or correspond to the aforementioned embodiments, reference may be made to the descriptions of the aforementioned related contents such as step S110, which will not be repeated here.

It should be noted that the technical features described in the above embodiments can be arbitrarily arranged and combined and the order can be exchanged without contradiction, and can be arbitrarily combined into a new method technical solution.

The present disclosure provides a method for cell access control, which is performed by a UE. The method may include: receiving second configuration information determined by a network node based on first configuration information of a UE.

The network node is a current serving MN, a current serving SN or a candidate SN.

As shown in FIG. 6, an embodiment of the present disclosure provides a method for cell access control, which is performed by a UE. The method may include the following steps.

S140, second configuration information determined by a network node based on first configuration information of the UE is received.

S114, a mobility operation of a cell and/or a cell group is performed based on the second configuration information corresponding to the first configuration information.

In an embodiment, the network node is a current serving MN, a current serving SN or a candidate SN.

The first configuration information may be at least one of the following stored in the UE: measurement configuration information, wherein the measurement configuration information includes part or all of the measurement configurations related to the SCG; a trigger condition corresponding to SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In this way, the measurement configuration information stored in the UE can help the UE and multiple network nodes to negotiate and unify the measurement configuration regarding an SCG mobility operation, thereby improving the consistency of measurement configurations between the UE and the multiple network nodes, reducing an error caused by inconsistent configurations between the UE and the multiple network nodes due to a change in a serving node, and reducing the signaling overhead caused by frequent updates and synchronization of configurations.

It should be noted that, for descriptions of parts that are repeated or correspond to the aforementioned embodiments, reference may be made to the descriptions of the aforementioned related contents such as step S110, which will not be repeated here.

The present disclosure provides a method for cell access control, which is performed by a UE. The method may include: receiving second configuration information determined by a network node based on first configuration information of the UE.

In an embodiment, the network node is a current serving MN, a current serving SN or a candidate SN. The second configuration information includes or indicates configuration information of a candidate cell and/or a candidate cell group. The second configuration information includes indication information, and the indication information indicates whether a measurement identifier corresponding to the indication information is enabled or disabled.

It should be noted that, for descriptions of parts that are repeated or correspond to the aforementioned embodiments, reference may be made to the descriptions of the aforementioned related contents such as step S110, which will not be repeated here.

As shown in FIG. 7, an embodiment of the present disclosure provides a method for cell access control, which is performed by a UE. The method may include the following steps.

S150, second configuration information determined by a network node based on first configuration information of the UE is received.

S115, a mobility operation of a cell and/or a cell group is performed based on the second configuration information and an enabled measurement identifier among at least one measurement identifier in the UE.

In an embodiment, the network node is a current serving MN, a current serving SN or a candidate SN. The second configuration information includes or indicates the configuration information of a candidate cell and/or a candidate cell group. The second configuration information includes indication information, and the indication information indicates whether a measurement identifier corresponding to the indication information is enabled or disabled.

In an embodiment, performing the mobility operation of the cell and/or the cell group includes: accessing the candidate cell and/or the candidate cell group; and applying second configuration information in response to accessing the candidate cell and/or the candidate cell group.

In an embodiment, the second configuration information includes or indicates the configuration information of the candidate cell and/or the candidate cell group. The second configuration information includes indication information, and the indication information indicates whether the measurement identifier corresponding to the indication information is enabled or disabled.

In this way, based on the enabling and disabling of the measurement identifier by the network node, the UE can accurately determine the trigger condition corresponding to the mobility operation, and determine whether to evaluate the corresponding condition based on the validity of the measurement identifier, which is conducive to flexible adjustment of the trigger condition of the configuration, and can reduce signaling overhead.

It should be noted that, for descriptions of parts that are repeated or correspond to the aforementioned embodiments, reference may be made to the descriptions of the aforementioned related contents such as step S110, which will not be repeated here.

It should be noted that those skilled in the art can understand that the method provided in the embodiments of the present disclosure can be performed alone, or can be performed together with some methods in the embodiments of the present disclosure or other embodiments or some methods in the related art. For example, step S150 here can be combined with step S130, or can be combined with the aforementioned step S120, etc.

It should be noted that the technical features recorded in the aforementioned embodiments can be arbitrarily arranged and combined, and the order can be exchanged without contradiction, and can be arbitrarily combined into new method technical solutions.

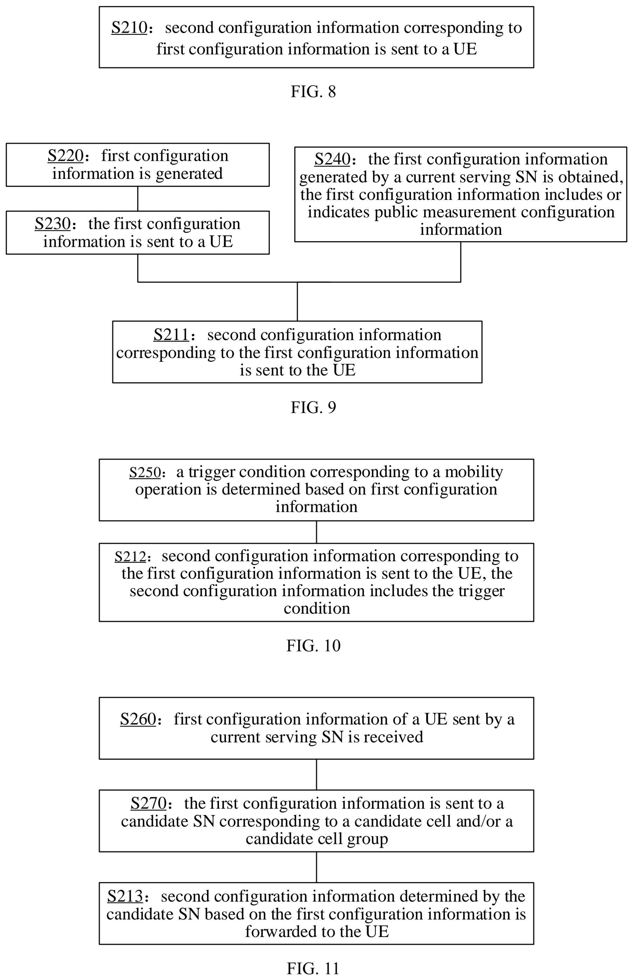

As shown in FIG 8, an embodiment of the present disclosure provides a method for cell access control, which is performed by a currently serving MN. The method includes the following steps.

S210, second configuration information corresponding to first configuration information is sent to a UE.

In an embodiment, the first configuration information is configured for mobility configuration, and the second configuration information comprises or indicates configuration information and/or a trigger condition of a candidate cell and/or a candidate cell group.

In an embodiment, the first configuration information is generated, and the first configuration information is sent to the UE. Or, the first configuration information generated by a current serving SN is obtained, the first configuration information includes or indicates public measurement configuration information.

In an embodiment, the first configuration information is generated, and the first configuration information is sent to the UE. Or, the first configuration information generated by the current serving SN is obtained, and the first configuration information includes or indicates the public measurement configuration information. The second configuration information corresponding to the first configuration information is sent to the UE. The first configuration information may be configured and/or updated by a network node.

In an embodiment, a trigger condition corresponding to a mobility operation is determined based on the first configuration information, and the second configuration information includes the trigger condition.

In an embodiment, the trigger condition corresponding to the mobility operation is determined based on the first configuration information. The second configuration information includes the trigger condition, and the second configuration information corresponding to the first configuration information is sent to the UE.

In an embodiment, the first configuration information of the UE sent by the current serving SN is received. The first configuration information is sent to a candidate SN corresponding to a candidate cell and/or a candidate cell group. The second configuration information determined by the candidate SN based on the first configuration information is forwarded to the UE.

In an embodiment, receiving the first configuration information of the UE sent by the current serving SN includes: receiving the first configuration information of the UE sent by the current serving SN when at least one of following situations occurs in the UE: a change in an SCG accessed by the UE; a change in measurement configuration information corresponding to the SCG accessed by the UE; a change in configuration information corresponding to SCG mobility; or a change in a trigger condition corresponding to the SCG mobility.

In an embodiment, the first configuration information of the UE is sent to the candidate SN. The second configuration information determined by the candidate SN based on the first configuration information is forwarded to the UE. The second configuration information includes or indicates the configuration information of the candidate cell and/or the candidate cell group. The second configuration information includes indication information, and the indication information indicates whether a measurement identifier corresponding to the indication information is enabled or disabled.

In an embodiment, an identifier and/or a trigger condition of a newly added candidate cell and/or a newly added candidate cell group is sent to the current candidate SN, and the second configuration information updated by the current candidate SN based on the identifier and/or the trigger condition is forwarded to a current serving SN.

In an embodiment, the second configuration information corresponding to the first configuration information is sent to the UE. The identifier and/or the trigger condition of the newly added candidate cell and/or the newly added candidate cell group is sent to the current candidate SN. The second configuration information updated by the current candidate SN based on the identifier and/or the trigger condition is forwarded to the current serving SN.

In an embodiment, the first configuration information of the UE is sent to the candidate SN. The second configuration information determined by the candidate SN based on the first configuration information is forwarded to the UE. The second configuration information includes or indicates the configuration information of the candidate cell and/or the candidate cell group. The second configuration information includes indication information, and the indication information indicates whether the measurement identifier corresponding to the indication information is enabled or disabled. The identifier and/or the trigger condition of the newly added candidate cell and/or the newly added candidate cell group is sent to the current candidate SN. and the second configuration information updated by the current candidate SN based on the identifier and/or the trigger condition is forwarded to the current serving SN.

It should be noted that, for descriptions of contents that are repeated or correspond to the aforementioned UE-side embodiments, reference may be made to the UE-side embodiments, such as step S110 and other related contents, which will not be repeated here.

It should be noted that those skilled in the art can understand that the method provided in the embodiments of the present disclosure can be executed alone or together with some methods in the embodiments of the present disclosure or other embodiments or some methods in the related art.

It should be noted that the technical features recorded in the aforementioned embodiments can be arbitrarily arranged and combined, and the order can be exchanged without contradiction, and can be arbitrarily combined into new method technical solutions.

The present disclosure provides a method for cell access control, which is performed by a currently serving MN. The method includes: generating first configuration information and sending the first configuration information to a UE; or obtaining the first configuration information generated by a current serving SN, in which the first configuration information comprises or indicates public measurement configuration information

As shown in FIG. 9, an embodiment of the present disclosure provides a method for cell access control, which is performed by a currently serving MN. The method includes following steps.

S220, first configuration information is generated.

S230, the first configuration information is sent to a UE.

Or, S240, the first configuration information generated by a current serving SN is obtained, the first configuration information includes or indicates public measurement configuration information.

S211, second configuration information corresponding to the first configuration information is sent to the UE.

It should be noted that, for descriptions of parts that are repeated or correspond to the aforementioned embodiments, reference may be made to the aforementioned relevant parts of the UE side such as step S210 and step S110, which will not be repeated here.

The present disclosure provides a method for cell access control, which is performed by a currently serving MN. The method includes: determining a trigger condition corresponding to a mobility operation based on first configuration information; and second configuration information includes the trigger condition.

In an embodiment, the first configuration information is generated, and the first configuration information is sent to a UE. Or, the first configuration information generated by a current serving SN is obtained, and the first configuration information includes or indicates public measurement configuration information. A trigger condition corresponding to a mobility operation is determined based on the first configuration information, and the second configuration information includes the trigger condition.

As shown in FIG. 10, an embodiment of the present disclosure provides a method for cell access control, which is performed by a currently serving MN. The method includes the following steps.

S250, a trigger condition corresponding to a mobility operation is determined based on first configuration information.

S212 second configuration information corresponding to the first configuration information is sent to the UE, the second configuration information includes the trigger condition.

It should be noted that, for descriptions of parts that are repeated or correspond to the aforementioned embodiments, reference may be made to the aforementioned relevant parts of the UE side such as step S210 and step S110, which will not be repeated here.

The present disclosure provides a method for cell access control, which is performed by a currently serving MN. The method includes: receiving first configuration information of a UE sent by a current serving SN; and sending the first configuration information to a candidate SN corresponding to a candidate cell and/or a candidate cell group.

As shown in FIG. 11, an embodiment of the present disclosure provides a method for cell access control, which is performed by a currently serving MN. The method includes the following steps.

S260, first configuration information of a UE sent by a current serving SN is received.

S270, the first configuration information is sent to a candidate SN corresponding to a candidate cell and/or a candidate cell group.

S213, second configuration information determined by the candidate SN based on the first configuration information is forwarded to the UE.

It should be noted that, for descriptions of parts that are repeated or correspond to the aforementioned embodiments, reference may be made to the aforementioned relevant parts of the UE side such as step S210 and step S110, which will not be repeated here.

The present disclosure provides a method for cell access control, which is performed by a currently serving MN. The method includes: forwarding second configuration information determined by a candidate SN based on first configuration information to the UE. The second configuration information includes or indicates configuration information of a candidate cell and/or a candidate cell group. The second configuration information includes indication information, and the indication information indicates whether a measurement identifier corresponding to the indication information is enabled or disabled.

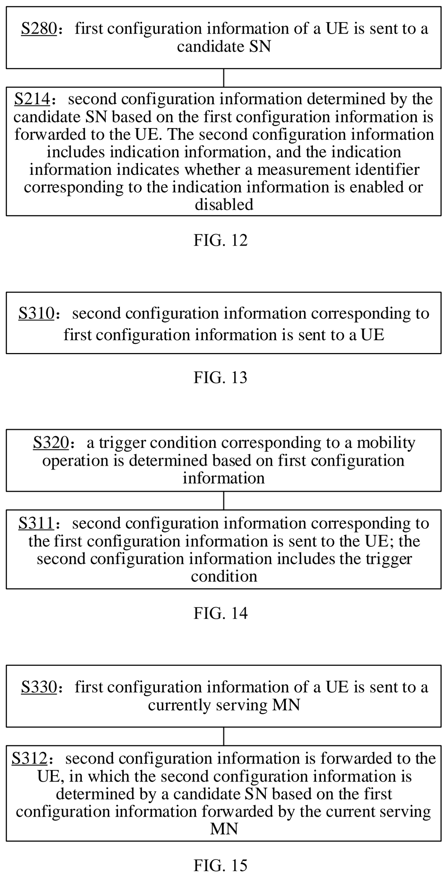

As shown in FIG. 12, an embodiment of the present disclosure provides a method for cell access control, which is performed by a currently serving MN. The method includes:
S280, first configuration information of a UE is sent to a candidate SN.
S214, second configuration information determined by the candidate SN based on the first configuration information is forwarded to the UE. The second configuration information includes indication information, and the indication information indicates whether a measurement identifier corresponding to the indication information is enabled or disabled.

It should be noted that, for descriptions of parts that are repeated or correspond to the aforementioned embodiments, reference may be made to the aforementioned relevant parts of the UE side such as step S210 and step S110, which will not be repeated here.

It should be noted that those skilled in the art can understand that the method provided in the embodiments of the present disclosure can be executed alone or together with some methods in the embodiments of the present disclosure or other embodiments or some methods in the related art.

It should be noted that the technical features described in the above embodiments can be arbitrarily arranged and combined, and the order can be exchanged without contradiction, and can be arbitrarily combined into a new method and technical solution. For example, steps S250 to S212 can be combined with steps S260 to S270 to form a new technical solution, etc.

As shown in FIG. 13, an embodiment of the present disclosure provides a method for cell access control, which is performed by the current serving SN, and the method includes the following step.

S310, second configuration information corresponding to first configuration information is sent to a UE.

In an embodiment, the first configuration information is configured for mobility configuration. The second configuration information includes or indicates configuration information and/or a trigger condition of a candidate cell and/or a candidate cell group.

In an embodiment, the first configuration information is generated; the first configuration information is sent to the UE and/or a currently serving MN; and the first configuration information includes or indicates public measurement configuration information.

In an embodiment, the first configuration information is generated; the first configuration information is sent to the UE and/or the currently serving MN; the first configuration information includes or indicates the public measurement configuration information; and the second configuration information corresponding to the first configuration information is sent to the UE.

In an embodiment, a trigger condition corresponding to a mobility operation is determined based on the first configuration information; and the second configuration information includes the trigger condition.

In an embodiment, the trigger condition corresponding to the mobility operation is determined based on the first configuration information; the second configuration information corresponding to the first configuration information is sent to the UE; and the second configuration information includes the trigger condition.

In an embodiment, the trigger condition corresponding to the mobility operation is determined based on the first configuration information; the first configuration information is generated; the first configuration information is sent to the UE and/or the currently serving MN; the first configuration information includes or indicates the public measurement configuration information; and the second configuration information corresponding to the first configuration information is sent to the UE.

In an embodiment, the first configuration information of the UE is sent to the currently serving MN; and the second configuration information corresponding to the first configuration information is sent to the UE.

In an embodiment, the first configuration information of the UE is sent to the current serving MN; the second configuration information is forwarded to the UE; in which the second configuration information is determined by a candidate SN based on the first configuration information forwarded by the current serving MN.

In an embodiment, sending the first configuration information of the UE to the currently serving MN includes: sending the first configuration information of the UE to the currently serving MN when at least one of following situations occurs in the UE: a change in an SCG accessed by the UE; a change in measurement configuration information corresponding to the SCG accessed by the UE; a change in configuration information corresponding to SCG mobility; or a change in a trigger condition corresponding to the SCG mobility.

In an embodiment, the first configuration information of the UE is sent to the candidate SN; and the second configuration information corresponding to the first configuration information is forwarded to the UE.

In an embodiment, the first configuration information of the UE is sent to the candidate SN; and the second configuration information determined by the candidate SN based on the first configuration information is forwarded to the UE. The second configuration information includes or indicates the configuration information of the candidate cell and/or the candidate cell group. The second configuration information includes indication information, and the indication information indicates whether a measurement identifier corresponding to the indication information is enabled or disabled.

In an embodiment, second configuration information updated by a current candidate SN based on an identifier and/or a trigger condition of a newly added candidate cell and/or a newly added candidate cell group is forwarded to the UE.

In an embodiment, the second configuration information corresponding to the first configuration information is forwarded to the UE; and the second configuration information updated by the current candidate SN based on the identifier and/or the trigger condition is forwarded to the UE.

In an embodiment, the first configuration information of the UE is sent to the candidate SN; and the second configuration information determined by the candidate SN based on the first configuration information is forwarded to the UE. The second configuration information includes or indicates the configuration information of the candidate cell and/or the candidate cell group. The second configuration information includes indication information, and the indication information indicates whether the measurement identifier corresponding to the indication information is enabled or disabled. The second configuration information updated by the current candidate SN based on the identifier and/or the trigger condition of the newly added candidate cell and/or the newly added candidate cell group is forwarded to the UE.

In an embodiment, the second configuration information updated by the current candidate SN based on the identifier and/or the trigger condition of the newly added candidate cell and/or the newly added candidate cell group is forwarded to the UE.

In an embodiment, the second configuration information corresponding to the first configuration information is forwarded to the UE; and the second configuration information updated by the current candidate SN based on the identifier and/or the trigger condition is forwarded to the UE.

In an embodiment, the first configuration information of the UE is sent to the candidate SN; and the second configuration information determined by the candidate SN based on the first configuration information is forwarded to the UE. The second configuration information includes or indicates the configuration information of the candidate cell and/or the candidate cell group. The second configuration information includes the indication information, and the indication information indicates whether the measurement identifier corresponding to the indication information is enabled or disabled. The second configuration information updated by the current candidate SN based on the identifier and/or the trigger condition of the newly added candidate cell and/or the newly added candidate cell group is forwarded to the UE. The second configuration information updated by the current candidate SN based on the identifier and/or the trigger condition of the newly added candidate cell and/or the newly added candidate cell group is forwarded to the UE.

It should be noted that the interaction between the current serving SN and the UE or candidate SN can be forwarded through the current serving MN. For example, sending the first configuration information of the UE to the candidate SN can be forwarding the first configuration information of the UE to the candidate SN through the current serving MN; and sending the first configuration information to the UE can be forwarding the first configuration information to the UE through the current serving MN, etc.

It should be noted that, for the description of the contents that are repeated or corresponding to the aforementioned embodiments, reference may be made to the description of the corresponding contents of the aforementioned embodiments, such as the UE side or the current serving MN side embodiments, and no further details will be given here.

It should be noted that those skilled in the art can understand that the method provided in the embodiments of the present disclosure can be executed alone or together with some methods in the embodiments of the present disclosure or some methods in the related art.

It should be noted that the technical features recorded in the aforementioned embodiments can be arbitrarily arranged and combined, and the order can be exchanged without contradiction, and can be arbitrarily combined into new method technical solutions.

The present disclosure provides a method for cell access control, which is performed by a current serving SN. The method includes: generating first configuration information; and sending the first configuration information to a UE and/or a currently serving MN. The first configuration information includes or indicates public measurement configuration information.

The present disclosure provides a method for cell access control, which is performed by a current serving SN. The method includes: generating first configuration information; sending the first configuration information to the UE and/or the currently serving MN, in which the first configuration information includes or indicates the public measurement configuration information; and sending second configuration information corresponding to the first configuration information to the UE.

It should be noted that, for the description of the contents that are repeated or corresponding to the aforementioned embodiments, reference may be made to the description of the corresponding contents of the aforementioned embodiments, such as the UE side or the current serving MN side embodiments, and no further details will be given here.

As shown in FIG. 14, an embodiment of the present disclosure provides a method for cell access control, which is performed by a current serving SN, and the method includes the following steps.

S320, a trigger condition corresponding to a mobility operation is determined based on first configuration information.

S311, second configuration information corresponding to the first configuration information is sent to the UE; the second configuration information includes the trigger condition.

In an embodiment, the trigger condition corresponding to the mobility operation is determined based on the first configuration information; the second configuration information includes the trigger condition; and the second configuration information corresponding to the first configuration information is sent to the UE.

In an embodiment, the first configuration information is generated; and the first configuration information is sent to the UE and/or a currently serving MN. The first configuration information includes or indicates the public measurement configuration information. The trigger condition corresponding to the mobility operation is determined based on the first configuration information. The second configuration information includes the trigger condition. The second configuration information corresponding to the first configuration information is sent to the UE.

It should be noted that, for the description of the contents that are repeated or corresponding to the aforementioned embodiments, reference may be made to the description of the corresponding contents of the aforementioned embodiments, such as the UE side or the current serving MN side embodiments, and no further details will be given here.

As shown in FIG. 15, an embodiment of the present disclosure provides a method for cell access control, which is performed by a current serving SN, and the method includes the following steps.

S330, first configuration information of a UE is sent to a currently serving MN.

S312, second configuration information is forwarded to the UE, in which the second configuration information is determined by a candidate SN based on the first configuration information forwarded by the current serving MN.

It should be noted that, for the description of the parts that are repeated or corresponding to the aforementioned embodiments, reference may be made to the description of the corresponding parts of the aforementioned embodiments, such as the UE side or the current serving MN side embodiments, and no further details will be given here.

The present disclosure provides a method for cell access control, which is performed by a current serving SN. The method includes: sending first configuration information of a UE to a candidate SN; and forwarding second configuration information corresponding to the first configuration information to the UE.

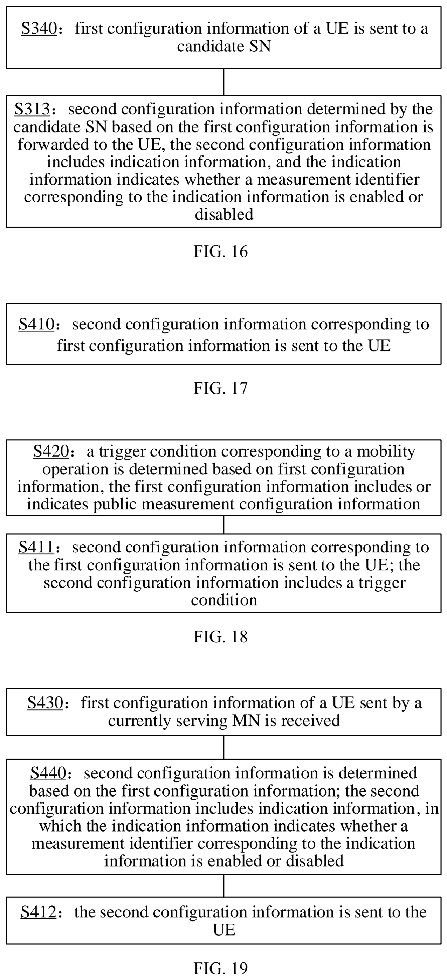

As shown in FIG. 16, an embodiment of the present disclosure provides a method for cell access control, which is performed by a current serving SN, and the method includes the following steps.

S340, first configuration information of a UE is sent to a candidate SN.

S313, second configuration information determined by the candidate SN based on the first configuration information is forwarded to the UE, the second configuration information includes indication information, and the indication information indicates whether a measurement identifier corresponding to the indication information is enabled or disabled.

It should be noted that, for the description of the contents that are repeated or corresponding to the aforementioned embodiments, reference may be made to the description of the corresponding contents of the aforementioned embodiments, such as the UE side or the current serving MN side embodiments, and no further details will be given here.

It should be noted that those skilled in the art can understand that the method provided in the embodiments of the present disclosure can be executed alone or together with some methods in the embodiments of the present disclosure or other embodiments or some methods in the related art.

It should be noted that the technical features described in the aforementioned embodiments can be arbitrarily arranged and combined, and the order can be exchanged without contradiction, and can be arbitrarily combined into new method technical solutions.

As shown in FIG. 17, an embodiment of the present disclosure provides a method for cell access control, which is performed by a candidate SN, and the method includes the following steps.

S410, second configuration information corresponding to first configuration information is sent to the UE.

In an embodiment, the first configuration information is configured for mobility configuration; and the second configuration information includes or indicates configuration information and/or a trigger condition of a candidate cell and/or a candidate cell group.

In an embodiment, a trigger condition corresponding to a mobility operation is determined based on the first configuration information; the first configuration information includes or indicates public measurement configuration information; the second configuration information includes the trigger condition; and the second configuration information corresponding to the first configuration information is sent to the UE.

In an embodiment, the first configuration information of the UE sent by a currently serving MN is received; second configuration information corresponding to the candidate SN is determined based on the first configuration information; and the second configuration information is sent to the UE.

The interaction between the candidate SN and the UE may be directly sending to the UE, or sending to the UE via a current serving SN and/or the current serving MN. For example, sending the second configuration information to the UE may include sending the second configuration information to the UE via the current serving SN and/or the current serving MN.

In an embodiment, the first configuration information of the UE sent by the currently serving MN is received; the second configuration information is determined based on the first configuration information; and the second configuration information is sent to the UE.

The second configuration information includes or indicates the configuration information of the candidate cell and/or the candidate cell group. The second configuration information includes indication information, and the indication information indicates whether a measurement identifier corresponding to the indication information is enabled or disabled.

In an embodiment, whether the measurement identifier is enabled or disabled is indicated by at least one of: a measurement identifier in the second configuration information; a measurement object identifier associated with the measurement identifier; measurement object information associated with the measurement identifier; a reporting configuration identifier associated with the measurement identifier; or reporting configuration information associated with the measurement identifier.

In an embodiment, the second configuration information corresponding to the first configuration information is sent to the UE; an identifier and/or a trigger condition of a newly added candidate cell and/or a newly added candidate cell group is received; the second configuration information corresponding to the candidate SN is updated based on the identifier and/or the trigger condition; and the updated second configuration information is sent to the currently serving MN.

It should be noted that, for descriptions of parts that are repeated or correspond to the aforementioned embodiments, reference may be made to the descriptions of corresponding parts of the aforementioned embodiments, such as S110 on the UE side, and no further details will be given here.

The present disclosure provides a method for cell access control, which is performed by a candidate SN. The method includes: determining a trigger condition corresponding to a mobility operation based on first configuration information. The first configuration information includes or indicates public measurement configuration information; and the second configuration information includes the trigger condition.

As shown in FIG. 18, an embodiment of the present disclosure provides a method for cell access control, which is performed by a candidate SN, and the method includes the following steps.

S420, a trigger condition corresponding to a mobility operation is determined based on first configuration information, the first configuration information includes or indicates public measurement configuration information.

S411, second configuration information corresponding to the first configuration information is sent to the UE; the second configuration information includes a trigger condition.

It should be noted that, for descriptions of parts that are repeated or correspond to the aforementioned embodiments, reference may be made to the descriptions of corresponding parts of the aforementioned embodiments, such as S110 on the UE side, and no further details will be given here.

The present disclosure provides a method for cell access control, which is performed by a candidate SN. The method includes: receiving first configuration information of a UE sent by a currently serving MN; determining second configuration information corresponding to the candidate SN based on the first configuration information; and sending the second configuration information to the UE through a current serving SN and/or the current serving MN.

It should be noted that, for descriptions of parts that are repeated or correspond to the aforementioned embodiments, reference may be made to the descriptions of corresponding parts of the aforementioned embodiments, such as S110 on the UE side, and no further details will be given here.

The present disclosure provides a method for cell access control, which is performed by a candidate SN. The method includes: receiving first configuration information of a UE sent by a currently serving MN; determining second configuration information based on the first configuration information. The second configuration information includes indication information, in which the indication information indicates whether a measurement identifier corresponding to the indication information is enabled or disabled.

As shown in FIG. 19, an embodiment of the present disclosure provides a method for cell access control, which is performed by a candidate SN, and the method includes the following steps.

S430, first configuration information of a UE sent by a currently serving MN is received.

S440, second configuration information is determined based on the first configuration information; the second configuration information includes indication information, in which the indication information indicates whether a measurement identifier corresponding to the indication information is enabled or disabled.

S412, the second configuration information is sent to the UE.

It should be noted that, for the description of the contents that are repeated or corresponding to the aforementioned embodiments, reference may be made to the description of the corresponding contents of the aforementioned embodiments, such as the UE side, and no further details will be given here.

It should be noted that those skilled in the art can understand that the method provided in the embodiments of the present disclosure can be executed alone or together with some methods in the embodiments of the present disclosure or some methods in the related art.

It should be noted that the technical features recorded in the aforementioned embodiments can be arbitrarily arranged and combined, and the order can be exchanged without contradiction, and can be arbitrarily combined into new method technical solutions.

The present disclosure provides a method for cell access control, the method comprising the following steps. A current serving MN and/or A current serving SN sends public measurement configuration information to a UE. A network node sends a trigger condition corresponding to SCG mobility determined based on the public measurement configuration information to the UE. The UE performs a cell group mobility operation based on the public measurement configuration information and/or the trigger condition.

In an embodiment, the network node includes at least one of a current serving MN, a current serving SN or a candidate SN.

In an embodiment, when the current serving SN generates and sends the public measurement configuration information to the UE, the current serving SN also sends the public measurement configuration information to the current serving MN.

It should be noted that, for the actions performed by the UE and related descriptions, reference may be made to step S110 and its related content; for the actions performed by the current serving MN and related descriptions, reference may be made to step S210 and its related content; for the actions performed by the current serving SN and related descriptions, reference may be made to step S310 and its related content; for the actions performed by the candidate SN and related descriptions, reference may be made to step S410 and its related content. For the description of the contents that are repeated or corresponding to the previous embodiments, reference may be made to the description of the corresponding contents of the previous embodiments, such as step S110, etc., and no further details will be given here.

The present disclosure provides a method for cell access control, the method comprising the following steps. A current serving SN sends configuration information currently stored in a UE to a current serving MN. Measurement configuration information includes: configuration information related to SCG. The current serving MN sends the measurement configuration information to a candidate SN. The candidate SN determines configuration information of a candidate cell and/or a candidate cell group based on the measurement configuration information, and forwards the configuration information of the candidate cell and/or the candidate cell group to the UE through the current serving MN and/or the current serving SN. The UE performs a cell group mobility operation based on the configuration information of the candidate cell and/or candidate cell group.

In an embodiment, the current serving SN sends the configuration information currently stored by the UE to the current serving MN when at least one of following situations occurs to the UE: a change in an SCG accessed by the UE; a change in measurement configuration information corresponding to the SCG accessed by the UE; a change in configuration information corresponding to SCG mobility; or a change in a trigger condition corresponding to the SCG mobility.

In an embodiment, sending the measurement configuration information by the current serving MN to the candidate SN may include the following steps. The current serving SN sends configurations of all measurement identifiers associated with the trigger condition, and configuration information corresponding to a measurement object and a reporting configuration associated with the measurement identifier to the current serving MN.

In an embodiment, the current serving SN may also send a trigger condition corresponding to the SCG mobility currently stored in the UE and an identifier of a corresponding candidate cell to the current serving MN.

It should be noted that, for the actions performed by the UE and related descriptions, reference may be made to step S110 and its related contents; for the actions performed by the current serving MN and related descriptions, reference may be made to step S210 and its related contents; for the actions performed by the current serving SN and related descriptions, reference may be made to step S310 and its related contents; for the actions performed by the candidate SN and related descriptions, reference may be made to step S410 and its related contents. For the description of the contents that are repeated or corresponding to the previous embodiments, reference may be made to the description of the corresponding contents of the previous embodiments, such as step S110, etc., and no further details will be given here.

The present disclosure provides a method for cell access control, the method comprising the following steps. The current serving MN sends configuration information currently stored by the UE to the candidate SN. The measurement configuration information may include: a candidate cell identifier currently stored in the UE and at least one measurement identifier corresponding to the corresponding trigger condition. The candidate SN determines the configuration information of the candidate cell and/or the candidate cell group based on the measurement configuration information. The candidate SN determines to enable or disable at least one measurement identifier. The candidate SN sends the configuration information of the candidate cell and/or the candidate cell group to the UE via the current serving MN and/or the current serving SN. The candidate SN sends at least one measurement identifier that is enabled or disabled to the UE. The UE performs a cell group mobility operation according to an enabled measurement identifier and the configuration information of the candidate cell and/or candidate cell group.

In an embodiment, the configuration information of the candidate cell and/or the candidate cell group may include configuration information generated by the candidate SN for a measurement identifier corresponding to the trigger condition of the candidate cell currently stored, such as at least one of a measurement object identifier associated with the measurement identifier, a reporting configuration identifier associated with the measurement identifier, measurement object configuration information associated with the measurement identifier, or reporting configuration information associated with the measurement identifier. The configuration information of the candidate cell and/or the candidate cell group is applied when the UE accesses the candidate cell.

In an embodiment, in response to the network needing to add a new candidate cell for the UE, or the measurement identifier corresponding to the trigger condition of the candidate cell needing to be changed, the current serving MN sends an identifier of a newly added candidate cell and the corresponding trigger condition to the candidate SN. The candidate SN updates the configuration information of the corresponding candidate cell based on the aforementioned steps and sends the configuration information updated to the current serving MN, and the current serving MN sends the configuration information updated to the current serving MN and the UE.

It should be noted that, for the actions performed by the UE and related descriptions, reference may be made to step S110 and its related contents; for the actions performed by the current serving MN and related descriptions, reference may be made to step S210 and its related contents; for the actions performed by the current serving SN and related descriptions, reference may be made to step S310 and its related contents; for the actions performed by the candidate SN and related descriptions, reference may be made to step S410 and its related contents. For the description of the contents that are repeated or corresponding to the previous embodiments, reference may be made to the description of the corresponding contents of the previous embodiments, such as step S110, etc., and no further details will be given here.

An embodiment of the present disclosure provides a system for cell access control, the system comprising: a UE, a current serving MN, a current serving SN and a candidate SN.

The UE is configured to perform a mobility operation of a cell and/or a cell group based on configuration information currently stored. Performing the mobility operation of the cell and/or the cell group based on the configuration information currently stored includes: performing the mobility operation of the cell and/or the cell group based on configuration information of the cell and/or the cell group determined by the candidate SN based on the configuration information currently stored by the UE, and/or performing the mobility operation of the cell and/or the cell group based on public measurement configuration information sent by a network node.

The current serving MN is configured to forward the configuration information currently stored by the UE to the candidate SN; and/or send the public measurement configuration information to the UE;

The current serving SN is configured to forward the configuration information currently stored by the UE to the current serving MN; and/or send the public measurement configuration information to the UE;
The candidate SN is configured to determine the configuration information of the candidate cell and/or the candidate cell group based on the configuration information currently stored by the UE sent by the current serving MN, and send the configuration information of the candidate cell and/or the candidate cell group to the UE; and/or send a trigger condition corresponding to SCG mobility determined based on the public measurement configuration information to the UE.

The mobility operation of the cell and/or cell group at least includes: addition and/or modification (or change) of a cell group accessed by the UE.

The present disclosure provides a method for cell access control, the method comprising the following steps. The current serving MN or the current serving SN sends a message carrying the public measurement configuration information to the UE, and the UE stores the message.

If the public measurement configuration information is generated by the current serving SN, the current serving SN forwards the public measurement configuration information to the current serving MN.

The present disclosure provides a method for cell access control, the method comprising: configuring, by the current serving SN, a trigger condition for the UE based on the public measurement configuration information.

The present disclosure provides a method for cell access control, the method comprising: when an SCG change (including an SCG change configured by the network for the UE, or a conditional SCG change being triggered) occurs for the UE, the UE does not release a conditional mobility configuration (configuration of selective activation of cell groups) and does not release the public measurement configuration information.

The present disclosure provides a method for cell access control, the method comprising that both the current serving SN and the current serving MN may update the public measurement configuration information.

The present disclosure provides a method for cell access control, the method includes the following steps. The public measurement configuration information may be reference configuration information for configuring configuration information of the candidate cell and/or the candidate cell group.

The network may determine a trigger condition of conditional triggering mobility based on based on the reference configuration information. The UE may determine an event corresponding to the trigger condition and the corresponding measurement object configuration according to the reference configuration information.

The present disclosure provides a method for cell access control, the method comprising: sending, by the current serving SN, measurement configuration information to the current serving MN, in which the measurement configuration information may be part or all of measurement configurations related to an SCG stored in the UE.

The present disclosure provides a method for cell access control, the method comprising: sending, by the current serving SN, all measurement configurations related to a trigger condition of the conditional SCG mobility configuration stored by the UE.

For example, the currently serving SN sends configurations of all measurement identifiers associated with the trigger condition, and configuration information corresponding to a measurement object and a reporting configuration associated with the measurement identifiers to the currently serving MN.

The present disclosure provides a method for cell access control, the method comprising the following step. The current serving SN may also send the trigger condition of the conditional SCG mobility configuration configured by an SCG and a configuration of the corresponding candidate cell (or candidate cell group) or an identifier of the candidate cell (or candidate cell group).

For example, the current serving SN sends the trigger condition corresponding to the SCG mobility currently stored by the UE and the identifier of the corresponding candidate cell to the current serving MN.

The present disclosure provides a method for cell access control, the method comprising the following steps. The current serving SN may send one or more types of the aforementioned information to the current serving MN when at least one of following situation occurs in the UE: an change of SCG, a change in a configuration of the conditional SCG mobility, a change in the trigger condition corresponding to the SCG mobility, or a change in a measurement configuration of the SCG.

The present disclosure provides a method for cell access control, the method comprising the following steps. The current serving MN may selectively forward the above information to the candidate SN, and the candidate SN generates the configuration information of the candidate cell and/or cell group based on the information.

The present disclosure provides a method for cell access control, the method comprising the following step. The current serving SN may send the above information to the current serving MN via a message such as S-NODE MODIFICATION REQUIRED, S-NODE CHANGE REQUIRED, etc. For example, it may be included in a CG-Config or CG-CandidateList message.

The present disclosure provides a method for cell access control, the method comprising the following step. The current serving MN sends an identifier of the candidate cell currently stored in the UE and a measurement identifies corresponding to the corresponding trigger condition to the candidate SN.

The present disclosure provides a method for cell access control, the method comprising the following steps. The candidate SN generates a new candidate cell configuration, which includes a corresponding measurement configuration. The measurement configuration information includes a configuration generated by the candidate SN for a measurement identifier corresponding to the trigger condition of the candidate cell currently stored, including: an identifier of a measurement object and an identifier of a reporting configuration associated with the measurement identifier, and the corresponding measurement object configuration information and reporting configuration information.

This new candidate cell configuration and the corresponding measurement configuration may be applied when the candidate cell is activated. After the candidate cell is activated, the UE may determine whether the currently stored condition of the candidate cell is met, and needs the corresponding configuration information.

The present disclosure provides a method for cell access control, the method comprising the following steps. For one or more measurement identifiers corresponding to the trigger condition of the candidate cell currently stored, the candidate SN may enable only some of the measurement identifiers, and indicate the enabled or disabled measurement identifiers in the configuration of the candidate cell. The enable/disable indication may be implicitly or explicitly included in the configuration of the measurement identifier, and/or the measurement object or reporting configuration associated with the measurement identifier. Or it may be indicated by a separate message.

The present disclosure provides a method for cell access control, the method comprising the following steps. The candidate SN forwards a new candidate cell configuration to the current serving MN, and the current serving MN sends it to the UE. At the same time, the trigger condition (one or more measurement identifiers) corresponding to the candidate cell is sent to the UE.

The present disclosure provides a method for cell access control, the method comprising the following steps. In response to the UE meeting the trigger condition of the candidate cell, the UE applies the configuration of the candidate cell, and continues to determine whether a trigger conditions of another candidate cell currently stored is met. When evaluating the trigger condition, it is determined whether an event corresponding to the measurement identifier associated with the trigger condition is met. If the trigger condition is associated with multiple measurement identifiers, only an event corresponding to the enabled measurement identifier needs to be evaluated. If the events corresponding to the enabled measurement identifiers are all met, the trigger condition is met and the configuration of the corresponding candidate cell is applied.

The present disclosure provides a method for cell access control, the method comprising the following steps. In response to the network needing to add a new candidate cell for the UE, or a measurement identifier corresponding to the trigger condition of the candidate cell needs to be changed, the current serving MN may send an identifier of a newly added candidate cell and a corresponding trigger condition to the candidate SN. The candidate SN updates the configuration information of the corresponding candidate cell based on the above steps and sends it to the current serving MN, and then the current serving MN sends it to the current serving SN.

It should be noted that the content description appearing in any of the foregoing embodiments can be applied to any other embodiments that record the same or corresponding related content without repetition.

It should be noted that the technical features recorded in the aforementioned embodiments can be arbitrarily arranged and combined, and the order can be exchanged without contradiction, and can be arbitrarily combined into new method technical solutions.

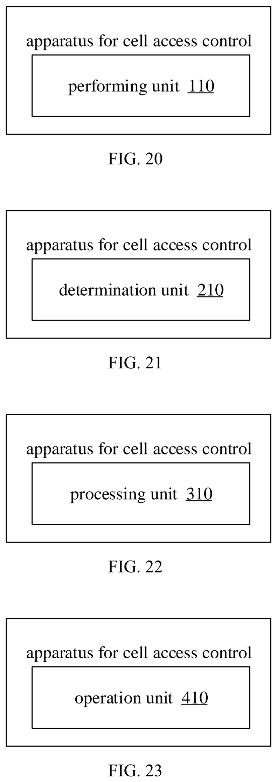

As shown in FIG. 20, an embodiment of the present disclosure provides an apparatus for cell access control, which is applied to a UE, and the apparatus includes: a performing unit 110.

The performing unit 110 is configured to perform a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group

In an embodiment, the performing unit 110 is further configured to receive the first configuration information sent by a current serving MN or a current serving SN; the first configuration information includes or indicates public measurement configuration information.

In an embodiment, the performing unit 110 is further configured to receive the second configuration information sent by a network node. The second configuration information comprises the trigger condition determined by the network node based on the first configuration information. The network node is a current serving MN, a current serving SN or a candidate SN. An event corresponding to the trigger condition is determined based on the first configuration information. When the UE meets the event corresponding to the trigger condition, the mobility operation of the cell and/or the cell group is performed based on the second configuration information.

In an embodiment, the second configuration information further comprises or indicates at least one of: cell mobility configuration information, cell group mobility configuration information, or a configuration identifier.

In an embodiment, the performing unit 110 is further configured to retain at least one of the first configuration information or the second configuration information in the UE after a secondary cell group (SCG) accessed by the UE changes.

In an embodiment, the performing unit 110 is further configured to receive the second configuration information determined by a network node based on the first configuration information of the UE, wherein the network node is a current serving MN, a current serving SN or a candidate SN.

In an embodiment, the first configuration information comprises or indicates at least one of: measurement configuration information, wherein the measurement configuration information comprises: part or all of measurement configurations related to an SCG; a trigger condition corresponding to SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In an embodiment, the part or all of measurement configurations related to the SCG comprises: all measurement configurations related to a trigger condition of a conditional SCG mobility configuration.

In an embodiment, the all measurement configurations related to the trigger condition of the conditional SCG mobility configuration comprises at least one of: configuration information of a measurement identifier associated with the trigger condition of the conditional SCG mobility configuration; a measurement object identifier associated with the measurement identifier; measurement object information associated with the measurement identifier; a reporting configuration identifier associated with the measurement identifier; reporting configuration information associated with the measurement identifier; or another configuration information related to the SCG mobility.

**In** an embodiment, the performing unit 110 is configured to receive the second configuration information determined by a network node based on the first configuration information of the UE. The network node is a current serving MN, a current serving SN or a candidate SN. The second configuration information comprises or indicates the configuration information of the candidate cell and/or the candidate cell group. The second configuration information comprises indication information, and the indication information indicates whether a measurement identifier corresponding to the indication information is enabled or disabled. The performing unit 110 is configured to perform the mobility operation of the cell and/or the cell group based on the second configuration information and an enabled measurement identifier among at least one measurement identifier in the UE.

**In** an embodiment, the performing unit 110 is configured to access the candidate cell and/or the candidate cell group; and in response to accessing the candidate cell and/or the candidate cell group, apply the second configuration information.

In an embodiment, the performing unit 110 is configured to determine whether at least one measurement identifier corresponding to a trigger condition of another candidate cell and/or another candidate cell group is enabled or disabled based on the second configuration information; access the another candidate cell and/or the another candidate cell group when the UE meets an event corresponding to the enabled measurement identifier; and apply second configuration information corresponding to the another candidate cell and/or the another candidate cell group accessed.

In an embodiment, the first configuration information comprises: an identifier of the candidate cell and/or the candidate cell group, and a measurement identifier corresponding to the trigger condition of the candidate cell and/or the candidate cell group.

In an embodiment, the configuration information of the candidate cell and/or the candidate cell group comprises at least one of: measurement configuration information, a measurement object identifier, measurement object information, a reporting configuration identifier, reporting configuration information, a measurement identifier, measurement identifier information, or radio resource control (RRC) reconfiguration information.

As shown in FIG. 21, an embodiment of the present disclosure provides an apparatus for cell access control, which is applied to a currently serving MN, and the apparatus includes: a determination unit 210.

The determination unit 210 is configured to sending second configuration information corresponding to first configuration information to a UE. The first configuration information is configured for mobility configuration, and the second configuration information comprises or indicates configuration information and/or a trigger condition of a candidate cell and/or a candidate cell group

In an embodiment, the determination unit 210 is further configured to: generate the first configuration information; and send the first configuration information to the UE; or obtain the first configuration information generated by a current serving SN, wherein the first configuration information comprises or indicates public measurement configuration information.

In an embodiment, the determination unit 210 is further configured to: determine a trigger condition corresponding to a mobility operation based on the first configuration information. The second configuration information comprises the trigger condition.

**In** an embodiment, the determination unit 210 is configured to: receive the first configuration information of the UE sent by a current serving SN; send the first configuration information to a candidate SN corresponding to the candidate cell and/or the candidate cell group; and forward the second configuration information determined by the candidate SN based on the first configuration information to the UE.

**In** an embodiment, the determination unit 210 is configured to receive the first configuration information of the UE sent by the current serving SN when at least one of following situations occurs in the UE: a change in a secondary cell group (SCG) accessed by the UE; a change in measurement configuration information corresponding to the SCG accessed by the UE; a change in configuration information corresponding to SCG mobility; or a change in a trigger condition corresponding to the SCG mobility.

In an embodiment, the first configuration information comprises or indicates at least one of: measurement configuration information, wherein the measurement configuration information comprises part or all of measurement configurations related to an SCG; a trigger condition corresponding to SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In an embodiment, the part or all of measurement configurations related to the SCG comprises: all measurement configurations related to a trigger condition of a conditional SCG mobility configuration.

In an embodiment, the all measurement configurations related to the trigger condition of the conditional SCG mobility configuration comprises at least one of: configuration information of a measurement identifier associated with the trigger condition of the conditional SCG mobility configuration; a measurement object identifier associated with the measurement identifier; measurement object information associated with the measurement identifier; a reporting configuration identifier associated with the measurement identifier; reporting configuration information associated with the measurement identifier; or another configuration information related to the SCG mobility.

In an embodiment, the determination unit 210 is further configured to: send the first configuration information of the UE to a candidate SN; and forward the second configuration information determined by the candidate SN based on the first configuration information to the UE. The second configuration information comprises or indicates the configuration information of the candidate cell and/or the candidate cell group, the second configuration information comprises indication information, and the indication information indicates whether a measurement identifier corresponding to the indication information is enabled or disabled.

In an embodiment, the determination unit 210 is further configured to: send an identifier and/or a trigger condition of a newly added candidate cell and/or a newly added candidate cell group to a current candidate SN; and forward second configuration information updated by the current candidate SN based on the identifier and/or the trigger condition to a current serving SN.

In an embodiment, the first configuration information comprises: an identifier of the candidate cell and/or the candidate cell group, and a measurement identifier corresponding to the trigger condition of the candidate cell and/or the candidate cell group.

In an embodiment, the configuration information of the candidate cell and/or the candidate cell group comprises at least one of: measurement configuration information, a measurement object identifier, measurement object information, a reporting configuration identifier, reporting configuration information, a measurement identifier, measurement identifier information, or radio resource control (RRC) reconfiguration information.

As shown in FIG. 22, an embodiment of the present disclosure provides an apparatus for cell access control, which is applied to a current serving SN, and the apparatus includes a processing unit 310.

The processing unit 310 is configured to send second configuration information corresponding to first configuration information to a UE. The first configuration information is configured for mobility configuration, and the second configuration information comprises or indicates configuration information and/or a trigger condition of a candidate cell and/or a candidate cell group.

In an embodiment, the processing unit 310 is further configured to: generate the first configuration information; and send the first configuration information to the UE and/or a current serving master node (MN). The first configuration information comprises or indicates public measurement configuration information

In an embodiment, the processing unit 310 is further configured to: determine a trigger condition corresponding to a mobility operation based on the first configuration information. The second configuration information comprises the trigger condition.

In an embodiment, the processing unit 310 is further configured to: send the first configuration information of the UE to a current serving MN; and forward the second configuration information to the UE. The second configuration information is determined by a candidate SN based on the first configuration information forwarded by the current serving MN.

In an embodiment, the processing unit 310 is configured to: send the first configuration information of the UE to the current serving MN when at least one of following situations occurs in the UE: a change in a secondary cell group (SCG) accessed by the UE; a change in measurement configuration information corresponding to the SCG accessed by the UE; a change in configuration information corresponding to SCG mobility; or a change in a trigger condition corresponding to the SCG mobility.

In an embodiment, the first configuration information comprises or indicates at least one of: measurement configuration information, wherein the measurement configuration information comprises: part or all of measurement configurations related to an SCG; a trigger condition corresponding to SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In an embodiment, the part or all of measurement configurations related to the SCG comprises: all measurement configurations related to a trigger condition of a conditional SCG mobility configuration.

In an embodiment, the all measurement configurations related to the trigger condition of the conditional SCG mobility configuration comprises at least one of: configuration information of a measurement identifier associated with the trigger condition of the conditional SCG mobility configuration; a measurement object identifier associated with the measurement identifier; measurement object information associated with the measurement identifier; a reporting configuration identifier associated with the measurement identifier; reporting configuration information associated with the measurement identifier; or another configuration information related to the SCG mobility.

**In** an embodiment, the processing unit 310 is further configured to: send the first configuration information of the UE to a candidate SN; and forward the second configuration information determined by the candidate SN based on the first configuration information to the UE. The second configuration information comprises or indicates the configuration information of the candidate cell and/or the candidate cell group. The second configuration information comprises indication information, and the indication information indicates whether a measurement identifier corresponding to the indication information is enabled or disabled.

In an embodiment, the first configuration information comprises: an identifier of the candidate cell and/or the candidate cell group, and a measurement identifier corresponding to the trigger condition of the candidate cell and/or the candidate cell group.

In an embodiment, the configuration information of the candidate cell and/or the candidate cell group comprises at least one of: measurement configuration information, a measurement object identifier, measurement object information, a reporting configuration identifier, reporting configuration information, a measurement identifier, measurement identifier information, or radio resource control (RRC) reconfiguration information.

As shown in FIG. 23, an embodiment of the present disclosure provides an apparatus for cell access control, which is applied to a candidate SN, and the apparatus includes an operation unit 410.

The operation unit 410 is configured to send second configuration information corresponding to first configuration information to a UE. The first configuration information is configured for mobility configuration, and the second configuration information comprises or indicates configuration information and/or a trigger condition of a candidate cell and/or a candidate cell group.

In an embodiment, the operation unit 410 is further configured to determine a trigger condition corresponding to the mobility operation based on the first configuration information; the first configuration information includes or indicates the public measurement configuration information; and the second configuration information includes the trigger condition.

In an embodiment, the operation unit 410 is further configured to: receive first configuration information of the UE sent by a current serving master node (MN); determine second configuration information corresponding to the candidate SN based on the first configuration information; and send the second configuration information to the UE through a current serving SN and/or the current serving MN.

In an embodiment, the operation unit 410 is configured to receive the first configuration information of the UE sent by the current serving MN when at least one of following situations occurs in the UE: a change in a secondary cell group (SCG) accessed by the UE; a change in measurement configuration information corresponding to the SCG accessed by the UE; a change in configuration information corresponding to SCG mobility; or a change in a trigger condition corresponding to the SCG mobility.

In an embodiment, the first configuration information comprises or indicates at least one of: measurement configuration information, wherein the measurement configuration information comprises: part or all of measurement configurations related to an SCG; a trigger condition corresponding to SCG mobility of the UE; configuration information of a candidate cell and/or a candidate cell group corresponding to the SCG mobility of the UE; or an identifier of the candidate cell and/or the candidate cell group corresponding to the SCG mobility of the UE.

In an embodiment, the part or all of measurement configurations related to the SCG comprises: all measurement configurations related to a trigger condition of a conditional SCG mobility configuration.

In an embodiment, the all measurement configurations related to the trigger condition of the conditional SCG mobility configuration comprises at least one of: configuration information of a measurement identifier associated with the trigger condition of the conditional SCG mobility configuration; a measurement object identifier associated with the measurement identifier; measurement object information associated with the measurement identifier; a reporting configuration identifier associated with the measurement identifier; reporting configuration information associated with the measurement identifier; or another configuration information related to the SCG mobility.

In an embodiment, the operation unit 410 is further configured to: receive the first configuration information of the UE sent by a current serving MN; and determine the second configuration information based on the first configuration information. The second configuration information comprises or indicates the configuration information of the candidate cell and/or the candidate cell group. The second configuration information comprises indication information, and the indication information indicates whether a measurement identifier corresponding to the indication information is enabled or disabled.

In an embodiment, the measurement identifier being enabled or disabled is indicated by at least one of: a measurement identifier in the second configuration information; a measurement object identifier associated with the measurement identifier; measurement object information associated with the measurement identifier; a reporting configuration identifier associated with the measurement identifier; or reporting configuration information associated with the measurement identifier.

In an embodiment, the operation unit 410 is further configured to: receive an identifier and/or a trigger condition of a newly added candidate cell and/or a newly added candidate cell group; update second configuration information corresponding to the candidate SN based on the identifier and/or the trigger condition; and send the second configuration information updated to the current serving MN.

In an embodiment, the first configuration information comprises: an identifier of the candidate cell and/or the candidate cell group, and a measurement identifier corresponding to the trigger condition of the candidate cell and/or the candidate cell group.

In an embodiment, the configuration information of the candidate cell and/or the candidate cell group comprises at least one of: measurement configuration information, a measurement object identifier, measurement object information, a reporting configuration identifier, reporting configuration information, a measurement identifier, measurement identifier information, or radio resource control (RRC) reconfiguration information.

The present disclosure provides a communication device, including: a memory for storing instructions executable by a processor; the processor connected with the memory. The processor is configured to execute the method for cell access control provided by any of the aforementioned technical solutions.

The processor may include various types of storage media, which are non-transitory computer storage media that can continue to remember information stored thereon after the communication device loses power.

The communication device includes: a terminal or a network element, and the network element can be any one of the current serving MS, the current serving SN, or the candidate SN mentioned above.

The processor may be connected to the memory via a bus or the like, and may be configured to read an executable program stored in the memory, for example, at least one of the methods shown in FIG. 2 to FIG. 19.

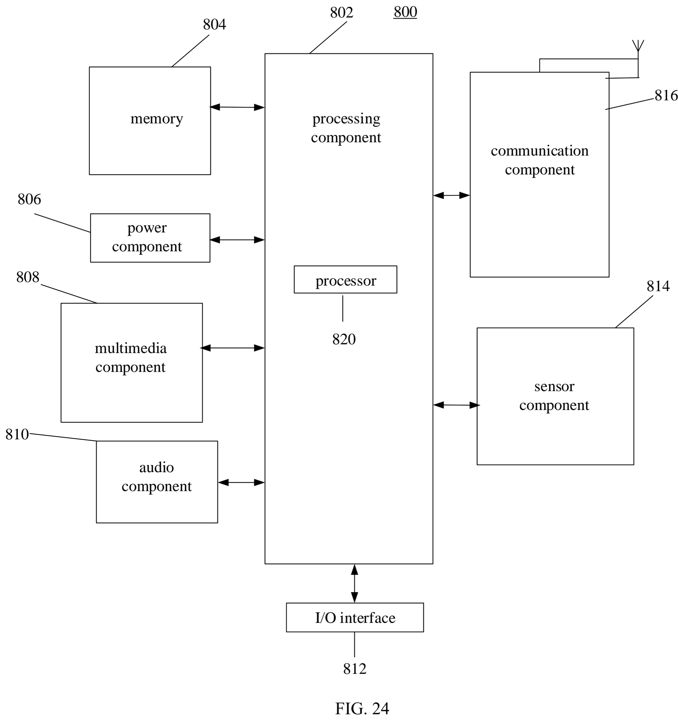

FIG. 24 is a block diagram of a terminal 800 according to an embodiment of the disclosure. For example, the terminal 800 may be a mobile phone, a computer, a digital broadcast user device, a messaging device, a game console, a tablet device, a medical device, a fitness device, a personal digital assistant, etc.

As shown in FIG. 24, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to generate all or part of the steps of the above-mentioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations at the terminal 800. Examples of such data include instructions for any application or method operating on the terminal 800, contact data, phone book data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the terminal 800. The power component 806 may include a power management system, one or more power supplies, and other components associated with generating, managing, and distributing power to terminal 800.

The multimedia component 808 includes a screen that provides an output interface between the terminal 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the terminal 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC), and when the terminal 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as keyboards, click wheels, buttons, etc. These buttons may include but are not limited to: a home button, a volume button, a start button, and a lock button.

The sensor component 814 includes one or more sensors for providing various aspects of status assessment for the terminal 800. For example, the sensor component 814 can detect the open/closed state of the terminal 800, the relative positioning of the components, such as the display and keypad of the terminal 800, and the sensor component 814 can also detect the position change of the terminal 800 or a component of the terminal 800, the presence or absence of contact between the user and the terminal 800, the orientation or acceleration/deceleration of the terminal 800 and the temperature change of the terminal 800. The sensor component 814 may include a proximity sensor configured to detect the presence of nearby objects without any physical contact. The sensor component 814 may also include an optical sensor, such as a complementary metal oxide semiconductor (CMOS) or a charge coupled device (CCD) image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate the communication between the terminal 800 and other devices in a wired or wireless manner. The terminal 800 can access a wireless network based on a communication standard, such as Wi-Fi, 2G or 3G, or a combination thereof. In an embodiment, the communication component 816 receives a broadcast signal from an external broadcast management system or broadcast related information via a broadcast channel. In an embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the terminal 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods.

In an embodiment, a non-transitory computer-readable storage medium including instructions is also provided, such as the memory 804 including instructions, which can be executed by the processor 820 of the terminal 800 to generate the above method. For example, the non-transitory computer-readable storage medium can be a ROM, a random access memory (RAM), a CD-ROM, a magnetic tape, a floppy disk, an optical data storage device, etc.

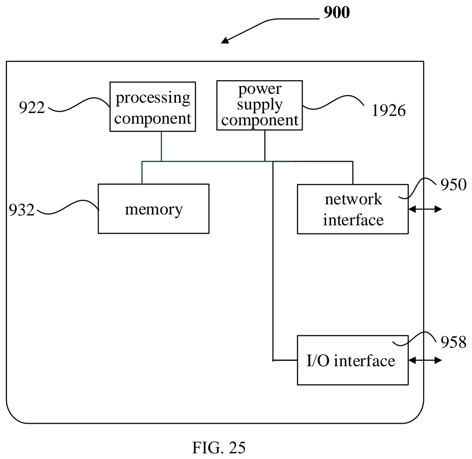

As shown in FIG. 25, an embodiment of the present disclosure shows a structure of a communication device 900. For example, the communication device 900 may be provided as a network device. The communication device 900 may be the aforementioned base station.

As shown in FIG. 25, the communication device 900 includes a processing component 922, which further includes one or more processors, and a memory resource represented by a memory 932 for storing instructions executable by the processing component 922, such as an application. The application stored in the memory 932 may include one or more modules each corresponding to a set of instructions. In addition, the processing component 922 is configured to execute instructions to perform any method performed by the aforementioned application in the base station, for example, at least one of the methods shown in Figures 2 to 19.

The communication device 900 may also include a power supply component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server^{™}, Mac OS X^{™}, Unix^{™}, Linux^{™}, FreeBSD ^{™} or the like.

Those skilled in the art may appreciate other embodiments of the present disclosure after considering the specification and practicing the disclosure disclosed herein. The present disclosure is intended to cover any variations, uses or adaptations of the present disclosure that follow the general principles of the present disclosure and include common knowledge or customary techniques in the art that are not disclosed in the present disclosure. The description and examples are to be considered illustrative only, and the true scope and spirit of the present disclosure are indicated by the appended claims.

It should be understood that the present disclosure is not limited to the exact construction that has been described above and shown in the drawings and that various modifications and changes may be made without departing from the scope thereof. The scope of the present disclosure is limited only by the appended claims.

## Claims

1. A method for cell access control, performed by a user equipment (UE), comprising:
performing a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group.

2. The method as claimed in claim 1, wherein before performing the mobility operation of the cell and/or the cell group based on the second configuration information corresponding to the first configuration information, the method further comprises:
receiving the first configuration information sent by a current serving master node (MN) or a current serving secondary node (SN), wherein the first configuration information comprises or indicates public measurement configuration information.

3. The method as claimed in claim 1 or 2, wherein before performing the mobility operation of the cell and/or the cell group based on the second configuration information corresponding to the first configuration information, the method further comprises:
receiving the second configuration information sent by a network node, wherein the second configuration information comprises the trigger condition determined by the network node based on the first configuration information, and the network node is a current serving MN, a current serving SN or a candidate SN;
wherein performing the mobility operation of the cell and/or the cell group based on the second configuration information corresponding to the first configuration information comprises:
determining an event corresponding to the trigger condition based on the first configuration information; and
when the UE meets the event corresponding to the trigger condition, performing the mobility operation of the cell and/or the cell group based on the second configuration information.

4. The method as claimed in any one of claims 1 to 3, wherein the second configuration information further comprises or indicates at least one of:
cell mobility configuration information, cell group mobility configuration information, or a configuration identifier.

5. The method as claimed in any one of claims 2 to 4, further comprising:
after a secondary cell group (SCG) accessed by the UE changes, retaining at least one of the first configuration information or the second configuration information in the UE.

6. The method as claimed in claim 1, wherein before performing the mobility operation of the cell and/or the cell group based on the second configuration information corresponding to the first configuration information, the method further comprises:
receiving the second configuration information determined by a network node based on the first configuration information of the UE, wherein the network node is a current serving MN, a current serving SN or a candidate SN.

7. The method as claimed in claim 6, wherein the first configuration information comprises or indicates at least one of:
measurement configuration information, wherein the measurement configuration information comprises: part or all of measurement configurations related to an SCG;
a trigger condition corresponding to SCG mobility of the UE;
configuration information of a candidate cell and/or a candidate cell group corresponding to the SCG mobility of the UE; or
an identifier of the candidate cell and/or the candidate cell group corresponding to the SCG mobility of the UE.

8. The method as claimed in claim 7, wherein the part or all of measurement configurations related to the SCG comprises:
all measurement configurations related to a trigger condition of a conditional SCG mobility configuration.

9. The method as claimed in claim 8, wherein the all measurement configurations related to the trigger condition of the conditional SCG mobility configuration comprises at least one of:
configuration information of a measurement identifier associated with the trigger condition of the conditional SCG mobility configuration;
a measurement object identifier associated with the measurement identifier;
measurement object information associated with the measurement identifier;
a reporting configuration identifier associated with the measurement identifier;
reporting configuration information associated with the measurement identifier; or
another configuration information related to the SCG mobility.

10. The method as claimed in claim 1, wherein before performing the mobility operation of the cell and/or the cell group based on the second configuration information corresponding to the first configuration information, the method further comprises:
receiving the second configuration information determined by a network node based on the first configuration information of the UE, wherein the network node is a current serving MN, a current serving SN or a candidate SN, the second configuration information comprises or indicates the configuration information of the candidate cell and/or the candidate cell group, the second configuration information comprises indication information, and the indication information indicates whether a measurement identifier corresponding to the indication information is enabled or disabled;
wherein performing the mobility operation of the cell and/or the cell group based on the second configuration information corresponding to the first configuration information comprises:
performing the mobility operation of the cell and/or the cell group based on the second configuration information and an enabled measurement identifier among at least one measurement identifier in the UE.

11. The method as claimed in claim 10, wherein performing the mobility operation of the cell and/or the cell group comprises:
accessing the candidate cell and/or the candidate cell group; and
in response to accessing the candidate cell and/or the candidate cell group, applying the second configuration information.

12. The method as claimed in claim 10, wherein performing the mobility operation of the cell and/or the cell group based on the second configuration information and the enabled measurement identifier among the at least one measurement identifier in the UE comprises:
determining whether at least one measurement identifier corresponding to a trigger condition of another candidate cell and/or another candidate cell group is enabled or disabled based on the second configuration information;
accessing the another candidate cell and/or the another candidate cell group when the UE meets an event corresponding to the enabled measurement identifier; and
applying second configuration information corresponding to the another candidate cell and/or the another candidate cell group accessed.

13. The method as claimed in any one of claims 10 to 12, wherein the first configuration information comprises: an identifier of the candidate cell and/or the candidate cell group, and a measurement identifier corresponding to the trigger condition of the candidate cell and/or the candidate cell group.

14. The method as claimed in any one of claims 1 to 13, wherein the configuration information of the candidate cell and/or the candidate cell group comprises at least one of:
measurement configuration information, a measurement object identifier, measurement object information, a reporting configuration identifier, reporting configuration information, a measurement identifier, measurement identifier information, or radio resource control (RRC) reconfiguration information.

15. A method for cell access control, performed by a current serving master node (MN), comprising:
sending second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

16. The method as claimed in claim 15, further comprising:
generating the first configuration information; and sending the first configuration information to the UE;
or
obtaining the first configuration information generated by a current serving secondary node (SN), wherein the first configuration information comprises or indicates public measurement configuration information.

17. The method as claimed in claim 16, further comprising:
determining a trigger condition corresponding to a mobility operation based on the first configuration information;
wherein the second configuration information comprises the trigger condition.

18. The method as claimed in claim 15, wherein before sending the second configuration information corresponding to the first configuration information to the UE, the method further comprises:
receiving the first configuration information of the UE sent by a current serving SN; and
sending the first configuration information to a candidate SN corresponding to the candidate cell and/or the candidate cell group;
wherein sending the second configuration information corresponding to the first configuration information to the UE comprises:
forwarding to the UE, the second configuration information determined by the candidate SN based on the first configuration information.

19. The method as claimed in claim 18, wherein receiving the first configuration information of the UE sent by the current serving SN comprises:
receiving the first configuration information of the UE sent by the current serving SN when at least one of following situations occurs in the UE:
a change in a secondary cell group (SCG) accessed by the UE;
a change in measurement configuration information corresponding to the SCG accessed by the UE;
a change in configuration information corresponding to SCG mobility; or
a change in a trigger condition corresponding to the SCG mobility.

20. The method as claimed in claim 18 or 19, wherein the first configuration information comprises or indicates at least one of:
measurement configuration information, wherein the measurement configuration information comprises: part or all of measurement configurations related to an SCG;
a trigger condition corresponding to SCG mobility of the UE;
configuration information of a candidate cell and/or a candidate cell group corresponding to the SCG mobility of the UE; or
an identifier of the candidate cell and/or the candidate cell group corresponding to the SCG mobility of the UE.

21. The method as claimed in claim 20, wherein the part or all of measurement configurations related to the SCG comprises:
all measurement configurations related to a trigger condition of a conditional SCG mobility configuration.

22. The method as claimed in claim 21, wherein the all measurement configurations related to the trigger condition of the conditional SCG mobility configuration comprises at least one of:
configuration information of a measurement identifier associated with the trigger condition of the conditional SCG mobility configuration;
a measurement object identifier associated with the measurement identifier;
measurement object information associated with the measurement identifier;
a reporting configuration identifier associated with the measurement identifier;
reporting configuration information associated with the measurement identifier; or
another configuration information related to the SCG mobility.

23. The method as claimed in claim 15, wherein before sending the second configuration information corresponding to the first configuration information to the UE, the method further comprises:
sending the first configuration information of the UE to a candidate SN;
wherein sending the second configuration information corresponding to the first configuration information to the UE comprises:
forwarding to the UE, the second configuration information determined by the candidate SN based on the first configuration information, wherein the second configuration information comprises or indicates the configuration information of the candidate cell and/or the candidate cell group, the second configuration information comprises indication information, and the indication information indicates whether a measurement identifier corresponding to the indication information is enabled or disabled.

24. The method as claimed in claim 23, further comprising:
sending an identifier and/or a trigger condition of a newly added candidate cell and/or a newly added candidate cell group to a current candidate SN; and
forwarding to a current serving SN, second configuration information updated by the current candidate SN based on the identifier and/or the trigger condition.

25. The method as claimed in claim 23 or 24, wherein the first configuration information comprises:
an identifier of the candidate cell and/or the candidate cell group, and a measurement identifier corresponding to the trigger condition of the candidate cell and/or the candidate cell group.

26. The method as claimed in any one of claims 15 to 25, wherein the configuration information of the candidate cell and/or the candidate cell group comprises at least one of:
measurement configuration information, a measurement object identifier, measurement object information, a reporting configuration identifier, reporting configuration information, a measurement identifier, measurement identifier information, or radio resource control (RRC) reconfiguration information.

27. A method for cell access control, performed by a current serving secondary node (SN), comprising:
sending second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

28. The method as claimed in claim 27, further comprising:
generating the first configuration information; and
sending the first configuration information to the UE and/or a current serving master node (MN), wherein the first configuration information comprises or indicates public measurement configuration information.

29. The method as claimed in claim 28, further comprising:
determining a trigger condition corresponding to a mobility operation based on the first configuration information;
wherein the second configuration information comprises the trigger condition.

30. The method as claimed in claim 27, wherein before sending the second configuration information corresponding to the first configuration information to the UE, the method further comprises:
sending the first configuration information of the UE to a current serving MN;
wherein sending the second configuration information corresponding to the first configuration information to the UE comprises:
forwarding the second configuration information to the UE, wherein the second configuration information is determined by a candidate SN based on the first configuration information forwarded by the current serving MN.

31. The method as claimed in claim 30, wherein sending the first configuration information of the UE to the current serving MN comprises:
sending the first configuration information of the UE to the current serving MN when at least one of following situations occurs in the UE:
a change in a secondary cell group (SCG) accessed by the UE;
a change in measurement configuration information corresponding to the SCG accessed by the UE;
a change in configuration information corresponding to SCG mobility; or
a change in a trigger condition corresponding to the SCG mobility.

32. The method as claimed in claim 30 or 31, wherein the first configuration information comprises or indicates at least one of:
measurement configuration information, wherein the measurement configuration information comprises: part or all of measurement configurations related to an SCG;
a trigger condition corresponding to SCG mobility of the UE;
configuration information of a candidate cell and/or a candidate cell group corresponding to the SCG mobility of the UE; or
an identifier of the candidate cell and/or the candidate cell group corresponding to the SCG mobility of the UE.

33. The method as claimed in claim 32, wherein the part or all of measurement configurations related to the SCG comprises:
all measurement configurations related to a trigger condition of a conditional SCG mobility configuration.

34. The method as claimed in claim 33, wherein the all measurement configurations related to the trigger condition of the conditional SCG mobility configuration comprises at least one of:
configuration information of a measurement identifier associated with the trigger condition of the conditional SCG mobility configuration;
a measurement object identifier associated with the measurement identifier;
measurement object information associated with the measurement identifier;
a reporting configuration identifier associated with the measurement identifier;
reporting configuration information associated with the measurement identifier; or
another configuration information related to the SCG mobility.

35. The method as claimed in claim 24, wherein before sending the second configuration information corresponding to the first configuration information to the UE, the method further comprises:
sending the first configuration information of the UE to a candidate SN
wherein sending the second configuration information corresponding to the first configuration information to the UE comprises:
forwarding to the UE, the second configuration information determined by the candidate SN based on the first configuration information, wherein the second configuration information comprises or indicates the configuration information of the candidate cell and/or the candidate cell group, the second configuration information comprises indication information, and the indication information indicates whether a measurement identifier corresponding to the indication information is enabled or disabled.

36. The method as claimed in claim 35, further comprising:
forwarding to the UE, second configuration information updated by a current candidate SN based on an identifier and/or a trigger condition of a newly added candidate cell and/or a newly added candidate cell group of the current candidate SN.

37. The method as claimed in claim 35 or 36, wherein the first configuration information comprises:
an identifier of the candidate cell and/or the candidate cell group, and a measurement identifier corresponding to the trigger condition of the candidate cell and/or the candidate cell group.

38. The method as claimed in any one of claims 27 to 37, wherein the configuration information of the candidate cell and/or the candidate cell group comprises at least one of:
measurement configuration information, a measurement object identifier, measurement object information, a reporting configuration identifier, reporting configuration information, a measurement identifier, measurement identifier information, or radio resource control (RRC) reconfiguration information.

39. A method for cell access control, performed by a candidate secondary node (SN), comprising:
sending second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

40. The method as claimed in claim 39, further comprising:
determining a trigger condition corresponding to a mobility operation based on the first configuration information, wherein the first configuration information comprises or indicates public measurement configuration information;
wherein the second configuration information comprises the trigger condition.

41. The method as claimed in claim 39, wherein before sending the second configuration information corresponding to the first configuration information to the UE, the method further comprises:
receiving first configuration information of the UE sent by a current serving master node (MN); and
determining second configuration information corresponding to the candidate SN based on the first configuration information;
wherein sending the second configuration information corresponding to the first configuration information to the UE comprises:
sending the second configuration information to the UE through a current serving SN and/or the current serving MN.

42. The method as claimed in claim 41, wherein receiving the first configuration information of the UE sent by the current serving MN comprises:
receiving the first configuration information of the UE sent by the current serving MN when at least one of following situations occurs in the UE:
a change in a secondary cell group (SCG) accessed by the UE;
a change in measurement configuration information corresponding to the SCG accessed by the UE;
a change in configuration information corresponding to SCG mobility; or
a change in a trigger condition corresponding to the SCG mobility.

43. The method as claimed in claim 41 or 42, wherein the first configuration information comprises or indicates at least one of:
measurement configuration information, wherein the measurement configuration information comprises: part or all of measurement configurations related to an SCG;
a trigger condition corresponding to SCG mobility of the UE;
configuration information of a candidate cell and/or a candidate cell group corresponding to the SCG mobility of the UE; or
an identifier of the candidate cell and/or the candidate cell group corresponding to the SCG mobility of the UE.

44. The method as claimed in claim 43, wherein the part or all of measurement configurations related to the SCG comprises:
all measurement configurations related to a trigger condition of a conditional SCG mobility configuration .

45. The method of claim 44, wherein the all measurement configurations related to the trigger condition of the conditional SCG mobility configuration comprises at least one of:
configuration information of a measurement identifier associated with the trigger condition of the conditional SCG mobility configuration;
a measurement object identifier associated with the measurement identifier;
measurement object information associated with the measurement identifier;
a reporting configuration identifier associated with the measurement identifier;
reporting configuration information associated with the measurement identifier; or
another configuration information related to the SCG mobility.

46. The method as claimed in claim 39, wherein, before sending the second configuration information corresponding to the first configuration information to the UE, the method further comprises:
receiving the first configuration information of the UE sent by a current serving MN; and
determining the second configuration information based on the first configuration information, wherein the second configuration information comprises or indicates the configuration information of the candidate cell and/or the candidate cell group, the second configuration information comprises indication information, and the indication information indicates whether a measurement identifier corresponding to the indication information is enabled or disabled.

47. The method of claim 46, wherein the measurement identifier being enabled or disabled is indicated by at least one of:
a measurement identifier in the second configuration information;
a measurement object identifier associated with the measurement identifier;
measurement object information associated with the measurement identifier;
a reporting configuration identifier associated with the measurement identifier; or
reporting configuration information associated with the measurement identifier.

48. The method as claimed in claim 46 or 47, further comprising:
receiving an identifier and/or a trigger condition of a newly added candidate cell and/or a newly added candidate cell group;
updating second configuration information corresponding to the candidate SN based on the identifier and/or the trigger condition; and
sending the second configuration information updated to the current serving MN.

49. The method as claimed in any one of claims 46 to 48, wherein the first configuration information comprises:
an identifier of the candidate cell and/or the candidate cell group, and a measurement identifier corresponding to the trigger condition of the candidate cell and/or the candidate cell group.

50. The method as claimed in any one of claims 39 to 49, wherein the configuration information of the candidate cell and/or the candidate cell group comprises at least one of:
measurement configuration information, a measurement object identifier, measurement object information, a reporting configuration identifier, reporting configuration information, a measurement identifier, measurement identifier information, or radio resource control (RRC) reconfiguration information.

51. A system for cell access control, comprising: a user equipment (UE), a current serving master node (MN), a current serving secondary node (SN), and a candidate SN, wherein
the UE is configured to perform a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group;
the currently serving MN is configured to send the second configuration information corresponding to the first configuration information to the UE;
the current serving SN is configured to send the second configuration information corresponding to the first configuration information to the UE; and
the candidate SN is configured to send the second configuration information corresponding to the first configuration information to the UE.

52. An apparatus for cell access control, applied to a user equipment (UE), comprising:
a performing unit, configured to perform a mobility operation of a cell and/or a cell group based on second configuration information corresponding to first configuration information, wherein the first configuration information is configured for mobility configuration, and the second configuration information comprises or indicates configuration information and/or a trigger condition of a candidate cell and/or a candidate cell group.

53. An apparatus for cell access control, applied to a currently serving master node (MN), comprising:
a forwarding unit, configured to send second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

54. An apparatus for cell access control, applied to a current serving secondary node (SN), comprising:
a processing unit, configured to send second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

55. An apparatus for cell access control, wherein the device is applied to a candidate secondary node (SN), comprising:
an operation unit, configured to send second configuration information corresponding to first configuration information to a user equipment (UE), wherein the first configuration information is configured for mobility configuration, and the second configuration information comprises or indicates configuration information and/or a trigger condition of a candidate cell and/or a candidate cell group.

56. A communication device, comprising a processor, a memory and an executable program stored in the memory and executable by the processor, wherein the processor performs the method as claimed in any one of claims 1 to 14, or the method as claimed in any one of claims 15 to 26, or the method as claimed in any one of claims 27 to 38, or the method as claimed in any one of claims 39 to 50 when running the program.

57. A computer storage medium for storing an executable program, wherein when the executable program is executed by a processor, the method as claimed in any one of claims 1 to 14, or the method as claimed in any one of claims 15 to 26, or the method as claimed in any one of claims 27 to 38, or the method as claimed in any one of claims 39 to 50 is performed.
